# EUROPEAN PATENT APPLICATION

(11) **EP 0 826 903 A2**
(43) Date of publication of application: **04.03.1998**
(21) Application number: 97113982.9
(22) Date of filing: 13.08.1997
(51) Int. Cl.: F16H 3/62, F16H 3/66

(54) **Gear train for a four-speed automatic transmission used in vehicles**

(30) Priority: 30.08.1996 KR 9668514
(71) Applicant: HYUNDAI MOTOR COMPANY, Jongro-ku, Seoul 110-270 (KR)
(72) Inventor: Park, Dong Hoon, Sugi-myun, Yongin-kun, Kyungki-do (KR)
(74) Representative: Viering, Jentschura & Partner

(57) **Abstract**

A gear train for a four-speed automatic transmission used in a vehicle includes a compound planetary gear set, realized through combining first and second simple planetary gear sets in a radial direction. The second simple planetary gear set is enclosed by a ring gear of the first simple planetary gear set, the ring gear able to act as a sun gear for the second simple planetary gear set. Although there are five operational elements, two of the elements are tied so as to have a total of four operational elements, and among these four operational elements at least two are selected as an input element and a reaction element. By rotational power inputted from an input shaft, the compound planetary gear set is able to convert into four forward speeds and one reverse speed, a clutch, mounted between at least two of the four operational elements of the compound planetary gear set, operates such that it selects the operational elements to be input elements, a brake is mounted between at least two of the four operational elements of the compound planetary gear set and a transmission housing, and operates such that it selects the operational elements to be reaction elements.

## Description

### BACKGROUND OF THE INVENTION

### Field of the Invention

The present invention relates to a gear train, and more particularly to a gear train for a four-speed automatic transmission used in vehicles which, by utilizing a compound planetary gear set consisting of two simple planetary gear sets combined radially, makes possible the design of an automatic transmission having a short length to allow for easy application to a front-wheel-drive vehicle in which an engine is installed transversely.

### Description of the Related Art

Generally, automatic transmission systems for vehicles are provided with a transmission control unit (TCU) which automatically controls shift ratios according to changes in a running condition of the vehicle.

The above-described TCU controls a plurality of friction elements provided in a gear train to either operative or inoperative states to select one of the three essential elements of the planetary gear set (a sun gear, a ring gear, and a planetary carrier) to be an input element, another one to be a reaction element, and another one to be an output element, thereby controlling an output number of revolutions.

There are different kinds of compound planetary gear systems used in automatic transmission systems including a Ravigneaux-type, a Simpson-type, and a 2 Simpson-type compound planetary gear system.

Also, the above-described compound planetary gear system, in order to allow for use as a shifting means for vehicles, has a structure in which planetary carriers of a first simple planetary gear set are connected to planetary carriers of a second simple planetary gear set, a structure where the planetary carrier and ring gear are connected through the sun gear, or a structure in which the planetary carriers of the first simple planetary gear set and ring gear of the second simple planetary gear set are directly connected to each other, namely, a structure wherein two planetary sets are connected in a direction of an axle.

However, in the conventional automatic transmission, as a length of the system in the direction of the axle is increased, mounting becomes difficult, especially when applying the automatic transmission of a front-wheel-drive vehicle in which the engine is mounted in a transverse direction. Consequently, much time and effort are expended in shortening the automatic transmission during the design process.

### SUMMARY OF THE INVENTION

The present invention has been made in an effort to solve the above problems.

It is an object of the present invention to provide a gear train for a four-speed automatic transmission used in vehicles which, by utilizing a compound planetary gear set consisting of two planetary gear sets combined in a radial direction, makes possible the design of an automatic transmission having a short length to allow for easy application to a front-wheel-drive vehicle in which an engine is installed transversely.

To achieve the above object, the present invention provides a gear train for a four-speed automatic transmission used in vehicles. A compound planetary gear set is provided, including a combined first and second simple planetary gear sets in a radial direction, the second simple planetary gear set being enclosed by a ring gear of the first simple planetary gear set, the ring gear able to act as a sun gear for the second simple planetary gear set. Although there are five operational elements, two of the elements are tied so as to have a total of four operational elements, and among these four operational elements at least two are selected as an input element and a reaction element, and by rotational power inputted from an input shaft, the compound planetary gear set is able to convert into four forward speeds and one reverse speed. A clutch means is provided, mounted between at least two of the four operational elements of the compound planetary gear set, for selecting the operational elements to be input elements. A brake means is also provided, mounted between at least two of the four operational elements of the compound planetary gear set and a transmission, for selecting the operational elements to be reaction elements.

According to a feature of the present invention, the input shaft and an output shaft are mounted aligned to each other.

According to another feature of the present invention, the compound planetary gear set integrally connects a sun gear of the first simple planetary gear set and a planetary carrier of the second simple planetary gear set and forms them to be one operational element.

According to still another feature of the present invention, the compound planetary gear set integrally connects a planetary carrier of the first simple planetary gear set and the planetary carrier of the second simple planetary gear set and forms them to be one operational element.

According to still yet another feature of the present invention, the compound planetary gear set integrally connects the sun gear of the first simple planetary gear set and a ring gear of the second simple planetary gear set and forms them to be one operational element.

According to still yet another feature of the present invention, the compound planetary gear set integrally connects the sun gear of the first simple planetary gear set and the ring gear of the second simple planetary gear set and forms them to be one operational element.

In one embodiment, the clutch means for transmitting engine power to the compound planetary gear set preferably includes a first clutch interposed between the ring gear of the first simple planetary gear set and the input shaft; a second clutch interposed between the planetary carrier of the second simple planetary gear set and the input shaft; and a third clutch interposed between the ring gear of the second simple planetary gear set and the input shaft.

In a second embodiment, the clutch means for transmitting engine power to the compound planetary gear set preferably includes a first clutch interposed between the sun gear of the first simple planetary gear set and the input shaft; a second clutch interposed between the planetary carrier of the first simple planetary gear set and the input shaft; and a third clutch interposed between the ring gear of the first simple planetary gear set and the input shaft.

In a third embodiment, the clutch means for transmitting engine power to the compound planetary gear set preferably includes a first clutch interposed between the ring gear of the first simple planetary gear set and the input shaft; a second clutch interposed between the ring gear of the second simple planetary gear set and the input shaft; and a third clutch interposed between the sun gear of the first simple planetary gear set and the input shaft.

In a fourth embodiment, the clutch means for transmitting engine power to the compound planetary gear set preferably includes a first clutch interposed between the sun gear of the first simple planetary gear set and the input shaft; and a second clutch interposed between both the ring gear of the second simple planetary gear set and the planetary carrier of the first simple planetary gear set and the input shaft.

In a fifth embodiment, the clutch means for transmitting engine power to the compound planetary gear set preferably includes a first clutch interposed between a connecting member connecting the sun gear of the first simple planetary gear set and the ring gear of the second simple planetary gear set and the input shaft; and a second clutch interposed between the planetary carrier of the first simple planetary gear set and the input shaft.

In a sixth embodiment, the clutch means for transmitting engine power to the compound planetary gear set preferably includes a first clutch interposed between the ring gear of the first simple planetary gear set and the input shaft; and a second clutch interposed between the planetary carrier of the first simple planetary gear set and the input shaft.

In a seventh embodiment, the clutch means for transmitting engine power to the compound planetary gear set preferably includes a first clutch interposed between the ring gear of the first simple planetary gear set and the input shaft; and a second clutch interposed between the planetary carrier of the second simple planetary gear set and the input shaft.

In a eighth embodiment, the clutch means for transmitting engine power to the compound planetary gear set preferably includes a first clutch interposed between the ring gear of the first simple planetary gear set and the input shaft; and a second clutch interposed between both the planetary carrier of the second simple planetary gear set and the sun gear of the first simple planetary gear set and the input shaft.

In one embodiment, the brake means preferably includes a first brake interposed between a connecting member connecting the sun gear of the first simple planetary gear set and the planetary carrier of the second simple planetary gear set and a transmission housing; and a second brake interposed between the ring gear of the second simple planetary gear set and the transmission housing.

In another embodiment, the brake means preferably includes a first brake interposed between the planetary carrier of the first and second simple planetary gear sets and the transmission housing; and a second brake interposed between the ring gear of the first simple planetary gear set and the transmission housing.

In another embodiment, the brake means preferably includes a first brake interposed between the ring gear of the second simple planetary gear set and the transmission housing; and a second brake interposed between the sun gear of the first simple planetary gear set and the transmission housing.

In yet another embodiment, the brake means preferably includes a first brake interposed between the ring gear of the first simple planetary gear set and the transmission housing; a second brake interposed between the sun gear of the first simple planetary gear set and the transmission housing; and a third brake interposed between the ring gear of the second simple planetary gear set and the transmission housing.

In yet another embodiment, the brake means preferably includes a first brake interposed between the ring gear of the first simple planetary gear set and the transmission housing; a second brake interposed between the ring gear of the second simple planetary gear set and the transmission housing; and a third brake interposed between a second shaft, connected with the planetary carrier of the first simple planetary gear set, and the transmission housing.

In yet another embodiment, the brake means preferably includes a first brake interposed between the sun gear of the first and second simple planetary gear sets and the transmission housing; a second brake interposed between the ring gear of the first simple planetary gear set and the transmission housing; and a third brake interposed between the planetary carrier of the first simple planetary gear set and the transmission housing.

In yet another embodiment the brake means preferably includes a first brake interposed between the ring gear of the second simple planetary gear set and the transmission housing; a second brake interposed between the ring gear of the first simple planetary gear set and the transmission housing; and a third brake interposed between the second shaft, connected to the planetary carrier of the first simple planetary gear set, and the transmission housing.

In yet another embodiment, the brake means preferably includes a first brake interposed between the sun gear of the second simple planetary gear set and the transmission housing; a second brake interposed between the ring gear of the first simple planetary gear set and the transmission housing; and a third brake interposed between the planetary carrier of the first simple planetary gear set and the transmission housing.

In yet another embodiment, the brake means preferably includes a first brake interposed between the sun gear and the ring gear of the first and second simple planetary gear sets and the transmission housing; a second brake interposed between the second shaft, connected with planetary carrier of the first simple planetary gear set, and the transmission housing; and a third brake interposed between the planetary carrier of the second simple planetary gear set and the transmission housing.

In yet another embodiment, the brake means preferably includes a first brake interposed between the ring gear of the first planetary gear set, combined with the sun gear of the second simple planetary gear set, and the transmission housing; a second brake interposed between the ring gear of the second simple planetary gear set and the transmission housing; and a third brake interposed between both the sun gear of the first simple planetary gear set and the planetary carrier of the second simple planetary gear set and the transmission housing.

The sun gear of the first simple planetary gear set preferably is connected to the planetary carrier of the second simple planetary gear set.

The clutch means is comprised of a plurality of clutches which are disposed between the input shaft and elements- the ring gear of the first simple planetary gear set and both the planetary carrier and ring gear of the second simple planetary gear set- such that the elements can selectively act as input elements. Moreover, the brake means is comprised of a plurality of brakes which are disposed between the transmission housing and elements- the sun gear of the first simple planetary gear set and the second simple planetary gear set- such that the elements can selectively act as reaction elements.

The planetary carrier of the first simple planetary gear set is connected to the planetary carrier of the second simple planetary gear set. The clutch means is comprised of a plurality of clutches which are disposed between the input shaft and elements- the sun gear, planetary carrier, and ring gear of the first simple planetary gear set and both the planetary carrier- such that the elements can selectively act as input elements. The brake means is comprised of a plurality of brakes which are disposed between the transmission housing and elements-the ring gear of the first simple planetary gear set and the planetary carrier of the second simple planetary gear set- such that the elements can selectively act as reaction elements.

In one embodiment, it is preferred that the planetary carrier of the first simple planetary gear set is connected to the planetary carrier of the second simple planetary gear set to operate as output elements. The clutch means is comprised of a plurality of clutches which are disposed between the input shaft and elements- the ring gear of the first simple planetary gear set, the ring gear of the second simple planetary gear set, and the sun gear of the first simple planetary gear set- such that the elements can selectively act as input elements; and the brake means is comprised of a plurality of brakes which are disposed between the transmission housing and elements- the ring gear of the first simple planetary gear set and the sun gear of the first simple planetary gear set- such that the elements can selectively act as reaction elements.

In another embodiment, it is preferred that the planetary carrier of the first simple planetary gear set is connected to the ring gear of the second simple planetary gear set to operate as output elements; the clutch means is comprised of a plurality of clutches which are disposed between the input shaft and elements- the sun gear of the first simple planetary gear set and both the planetary carrier and ring gear of the first and second simple planetary gear sets- such that the elements can selectively act as input elements; and the brake means is comprised of a plurality of brakes which are disposed between the transmission housing and elements- the ring gear of the first simple planetary gear set and both the planetary carrier and ring gear of the second simple planetary gear set- such that the elements can selectively act as reaction elements.

Preferably, the sun gear of the first simple planetary gear set is connected to the ring gear of the second simple planetary gear set to operate as input elements; the clutch means is comprised of a plurality of clutches which are disposed between the input shaft and elements- the sun gear of the first simple planetary gear set, the ring gear of the second simple planetary gear set, and the planetary carrier of the first simple planetary gear set- such that the elements can selectively act as input elements; and the brake means is comprised of a plurality of brakes which are disposed between the transmission housing and elements- the ring gear of the first simple planetary gear set, the ring gear of the second simple planetary gear set, and the planetary carrier of the first simple planetary gear set-such that the elements can selectively act as reaction elements.

In one embodiment, the planetary carrier of the first simple planetary gear set is connected to the planetary carrier of the second simple planetary gear set to operate as input and reaction elements; the clutch means is comprised of a plurality of clutches which are disposed between the input shaft and elements- the ring gear of the first simple planetary gear set and the planetary carrier of the second simple planetary gear set- such that the elements can selectively act as input elements; and the brake means is comprised of a plurality of brakes which are disposed between the transmission housing and elements- the ring gear, sun gear, and planetary carrier of the first simple planetary gear set- such that the elements can selectively act as reaction elements.

The sun gear of the first simple planetary gear set is connected to the planetary carrier of the second simple planetary gear set; the clutch means is comprised of a plurality of clutches which are disposed between the input shaft and elements- the ring gear and planetary carrier of the first simple planetary gear set- such that the elements can selectively act as input elements; and the brake means is comprised of a plurality of brakes which are disposed between the transmission housing and elements- the ring gear of the second simple planetary gear set and the ring gear and planetary carrier of the first simple planetary gear set- such that the elements can selectively act as reaction elements.

In another embodiment, the planetary carrier of the first simple planetary gear set is connected to the planetary carrier of the second simple planetary gear set to operate as output elements; the clutch means is comprised of a plurality of clutches which are disposed between the input shaft and elements- the ring gear of the first simple planetary gear set and the planetary carrier of the second simple planetary gear set- such that the elements can selectively act as input elements; and the brake means is comprised of a plurality of brakes which are disposed between the transmission housing and elements- the ring gear and sun gear of the first simple planetary gear set and the planetary carrier of the second simple planetary gear set- such that the elements can selectively act as reaction elements.

In another embodiment, the sun gear of the first simple planetary gear set is connected to the ring gear of the second simple planetary gear set; the clutch means is comprised of a plurality of clutches which are disposed between the input shaft and elements- the ring gear of the first simple planetary gear set and the planetary carrier of the second simple planetary gear set- such that the elements can selectively act as input elements; and the brake means is comprised of a plurality of brakes which are disposed between the transmission housing and elements- the planetary carrier of the first simple planetary gear set and the planetary carrier and ring gear of the second simple planetary gear set- such that the elements can selectively act as reaction elements.

In another embodiment the sun gear of the first simple planetary gear set is connected to the planetary carrier of the second simple planetary gear set; the clutch means is comprised of a plurality of clutches which are disposed between the input shaft and elements- the sun gear of the first simple planetary gear set and the ring of the second simple planetary gear set- such that the elements can selectively act as input elements; and the brake means is comprised of a plurality of brakes which are disposed between the transmission housing and elements- the ring gear of the first simple planetary gear set and the ring gear of the second simple planetary gear set- such that the elements can selectively act as reaction elements.

In one embodiment, the gear transmitting means comprises: a first gear interposed between the input shaft and the sun gear and ring gear of the first and second simple planetary gear sets; and a second gear interposed between the input shaft and the sun gear and ring gear of the first and second simple planetary gear sets.

In another embodiment, the gear transmitting means comprises: a first gear interposed between the input shaft and both a power transmitting member connected to the ring gear of the first simple planetary gear set and the planetary carrier of the first simple planetary gear set; and a second gear interposed between the input shaft and the ring gear of the second simple planetary gear set.

In another embodiment, the gear transmitting means comprises: a first gear interposed between the input shaft and the power transmitting member connected to the ring gear of the first simple planetary gear set; and a second gear interposed between the input shaft and the ring gear and planetary carrier of the second simple planetary gear set.

In another embodiment, the gear transmitting means comprises: a first gear interposed between the input shaft and the sun gear of the first simple planetary gear set; a second gear interposed between the input shaft and the planetary carrier of the second simple planetary gear set; and a third gear interposed between the input shaft and the ring gear of the first simple planetary gear set.

In another embodiment, the gear transmitting means comprises: a first gear interposed between the input shaft and the ring gear of the second simple planetary gear set; a second gear interposed between the input shaft and the planetary carrier of the first simple planetary gear set; and a third gear interposed between the input shaft and the ring gear of the first simple planetary gear set.

In one embodiment, the clutch means for transmitting engine power to the compound planetary gear set comprises: a first clutch interposed between the planetary carrier of the first simple planetary gear set and the input shaft; a second clutch interposed between the planetary carrier of the first simple planetary gear set, the ring gear of the second simple planetary gear set, and the input shaft; and a third clutch interposed between the sun gear of the first simple planetary gear set and the input shaft.

In another embodiment, the clutch means for transmitting engine power to the compound planetary gear set comprises: a first clutch interposed between the second shaft connected to the ring gear of the first simple planetary gear set and the first gear; a second clutch interposed between the planetary carrier of the first simple planetary gear set and the first gear; and a third clutch interposed between the ring gear of the second simple planetary gear set and the second gear.

In another embodiment, the clutch means for transmitting engine power to the compound planetary gear set comprises: a first clutch interposed between the sun gear and ring gear of the first and second simple planetary gear sets and the input shaft; a second clutch interposed between the planetary carrier of the second simple planetary gear set and the input shaft; and a third clutch interposed between the second shaft connected to the ring gear of the first simple planetary gear set and the input shaft.

In another embodiment, the clutch means for transmitting engine power to the compound planetary gear set comprises: a first clutch interposed between the ring gear of the first simple planetary gear set and the first gear; a second clutch interposed between the planetary carrier of the first simple planetary gear set and the second gear; and a third clutch interposed between the ring gear of the first simple planetary gear set and the third gear.

In one embodiment, the brake means comprises: a first brake interposed between the planetary carrier of the first simple planetary gear set and the transmission housing; and a second brake interposed between the ring gear of the second simple planetary gear set and the transmission housing.

In another embodiment, the brake means comprises: a first brake interposed between the planetary carrier of the second simple planetary gear set and the transmission housing; and a second brake interposed between the ring gear of the first simple planetary gear set and the transmission housing.

In another embodiment, the brake means comprises: a first brake interposed between the ring gear of the first simple planetary gear set and the transmission housing; and a second brake interposed between the planetary carrier of the second simple planetary gear set and the transmission housing.

In another embodiment, the brake means comprises: a first brake interposed between the planetary carrier of the first simple planetary gear set and the transmission housing; and a second brake interposed between the ring gear of the first simple planetary gear set and the transmission housing.

In one embodiment, the planetary carrier of the first simple planetary gear set is connected to the ring gear of the second simple planetary gear set; the gear transmitting means is comprised of a gear transmitting power to the power transmitting member connected to the sun gear and planetary carrier of the first simple planetary gear set forming the compound planetary gear set, and a gear transmitting power to the connecting member connected to the sun gear and ring gear of the first and second simple planetary gear sets; the clutch means is comprised of a plurality of clutches which are disposed between the input shaft and elements- the sun gear, planetary carrier, and ring gear of the first simple planetary gear set and the ring gear of the second simple planetary gear set- such that said elements can selectively act as input elements; and the brake means is comprised of a plurality of brakes which are disposed between the transmission housing and elements- the ring gear and sun gear of the first simple planetary gear set and the ring gear of the second simple planetary gear set- such that said elements can selectively act as reaction elements.

In one embodiment, the sun gear of the first simple planetary gear set is connected to the ring gear of the second simple planetary gear set; the gear transmitting means is comprised of a gear transmitting power to the planetary carrier and the power transmitting member connected to the ring gear of the first simple planetary gear set forming the compound planetary gear set, and a gear transmitting power to the ring gear of the second simple planetary gear set; the clutch means is comprised of a plurality of clutches which are disposed between the input shaft and elements- the ring gear of the first simple planetary gear set, planetary carrier of the first simple planetary gear set, and the ring gear and sun gear of the first and second simple planetary gear sets- such that said elements can selectively act as input elements; and the brake means is comprised of a plurality of brakes which are disposed between the transmission housing and elements- the planetary carrier of the first simple planetary gear set and the ring gear of the second simple planetary gear set-such that said elements can selectively act as reaction elements.

In another embodiment, the sun gear of the first simple planetary gear set is connected to the ring gear of the second simple planetary gear set; the gear transmitting means is comprised of a gear simultaneously transmitting power to the sun gear and ring gear of the first simple planetary gear and the gear transmitting member connected to the ring gear of the first simple planetary gear set forming the compound planetary gear set; the clutch means is comprised of a plurality of clutches which are disposed between the input shaft and elements- the ring gear of the first simple planetary gear set, the sun gear and ring gear of the first and second simple planetary gear sets, and the planetary carrier of the second simple planetary gear set-such that said elements can selectively act as input elements; and the brake means is comprised of a plurality of brakes which are disposed between the transmission housing and elements- the ring gear of the first simple planetary gear set and the planetary carrier of the second simple planetary gear set- such that said elements can selectively act as reaction elements.

In another embodiment, the sun gear of the first simple planetary gear set is connected to the ring gear of the second simple planetary gear set to operate as output elements; the gear transmitting means is comprised of a gear transmitting rotational power of the input shaft to the planetary carrier of the second simple planetary gear and the ring gear and sun gear of the first simple planetary gear set forming the compound planetary gear set; the clutch means is comprised of a plurality of clutches which are disposed between the input shaft and elements-the ring gear and sun gear of the first simple planetary gear set and the planetary carrier of the second simple planetary gear set- such that said elements can selectively act as input elements; and the brake means is comprised of a plurality of brakes which are disposed between the transmission housing and elements- the ring gear of the first simple planetary gear set and the planetary carrier of the second simple planetary gear set- such that said elements can selectively act as reaction elements.

In another embodiment, the sun gear of the first simple planetary gear set is connected to the planetary carrier of the second simple planetary gear set; the gear transmitting means is comprised of a gear transmitting rotational power of the input shaft by being inserted between the input shaft and the ring gear of the second simple planetary gear and the ring gear and planetary carrier of the first simple planetary gear set forming the compound planetary gear set; the clutch means is comprised of a plurality of clutches which are disposed between the input shaft and elements- the ring of the second simple planetary gear set, the planetary carrier of the first simple planetary gear set, and the ring gear of the first simple planetary gear set- such that said elements can selectively act as input elements; and the brake means is comprised of a plurality of brakes which are disposed between the transmission housing and elements- the planetary carrier and ring gear of the first simple planetary gear set- such that said elements can selectively act as reaction elements.

### BRIEF DESCRIPTION OF THE DRAWINGS

The accompanying drawings, which are incorporated in and constitute a part of the specification, illustrate an embodiment of the invention, and, together with the description, serve to explain the principles of the invention:
Fig. 1 is a schematic diagram of a gear train according to a first embodiment of the present invention;
Fig. 2 is an operational chart of friction elements in each shift range according to a first embodiment of the present invention;
Fig. 3 is a view for explaining an operation of the first embodiment of the present invention through a lever analogy method;
Fig. 4 is a schematic diagram of a gear train according to a second embodiment of the present invention;
Fig. 5 is a schematic diagram of a gear train according to a third embodiment of the present invention;
Fig. 6 is a schematic diagram of a gear train according to a fourth embodiment of the present invention;
Fig. 7 is an operational chart of friction elements in each shift range according to the fourth embodiment of the present invention;
Fig. 8 is a schematic diagram of a gear train according to a fifth embodiment of the present invention;
Fig. 9 is a schematic diagram of a gear train according to a sixth embodiment of the present invention;
Fig. 10 is a schematic diagram of a gear train according to a seventh embodiment of the present invention;
Fig. 11 is a schematic diagram of a gear train according to an eighth embodiment of the present invention;
Fig. 12 is a schematic diagram of a gear train according to an ninth embodiment of the present invention;
Fig. 13 is a schematic diagram of a gear train according to an tenth embodiment of the present invention;
Fig. 14 is an operational chart of friction elements in each shift range according to the tenth embodiment of the present invention;
Fig. 15 is a schematic diagram of a gear train according to an eleventh embodiment of the present invention;
Fig. 16 is a schematic diagram of a gear train according to an twelfth embodiment of the present invention;
Fig. 17 is a schematic diagram of a gear train according to an thirteenth embodiment of the present invention;
Fig. 18 is a schematic diagram of a gear train according to an fourteenth embodiment of the present invention; and
Fig. 19 is a schematic diagram of a gear train according to an fifteenth embodiment of the present invention.

### DESCRIPTION OF THE PREFERRED EMBODIMENTS

Preferred embodiments of the present invention will now be described in detail with reference to the accompanying drawings.

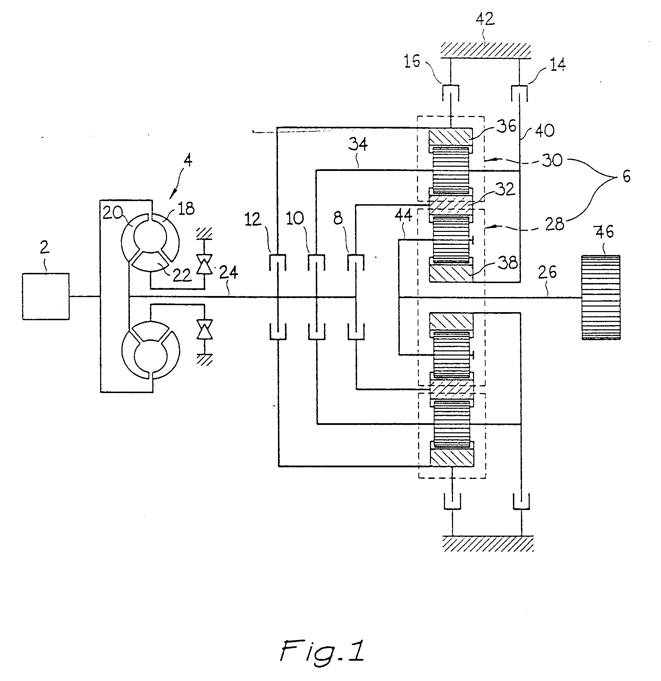

Referring to Fig. 1, power generated in an engine 2 passes through a torque converter 4 to realize torque conversion, and is then inputted to a compound planetary gear set 6, thereby accomplishing shifting.

In the above-described apparatus, at least one of the elements of the compound planetary gear set 6 acts as an input element through a selective operation of a clutch means realized through a plurality of clutches 8, 10, and 12, and at least one of the elements acts as a reaction element in all drive ranges excluding a forward third speed range through a selective operation of a brake means realized through a plurality of brakes 14 and 16.

The above-described torque converter 4, converting power created in the engine 2 into torque, includes a pump impeller 18 directly connected to a crankshaft(not shown) of the engine 2; a turbine runner 20 mounted opposing the pump impeller 18 such that it rotates together with oil discharged from the latter; and a stator 22 mounted between the pump impeller 18 and the turbine runner 20 which changes a flow of oil to increase a rotational force of the pump impeller 18.

Through the above structure, when the engine 2 operates, the oil filling the torque converter 4 is discharged from the pump impeller 18 and supplied to the turbine runner 20. After the turbine runner 20 is operated, the oil then flows to the stator 22.

The direction of the oil flowing into the stator 22 as in the above is changed therein to be re-directed to the pump impeller 18. This operation is repeated. Here, by a rotation of the stator 22, a difference appears in the rotational force of the pump impeller 18 and that of the turbine runner 20 given to the stator 22, thereby realizing torque conversion.

Also, the compound planetary gear set 6, receiving a transmission of power from the torque converter 4, is mounted on an output shaft 26 which is provided aligned with an input shaft 24 connected to the turbine runner 20 of the torque converter 4.

The compound planetary gear set 6 is realized through the combining of first and second simple planetary gear sets 28 and 30 in a radial direction. The second simple planetary gear set 30 is enclosed by a ring gear 32 of the first simple planetary gear set 28, and this ring gear 32 is able to act as a sun gear for the second simple planetary gear set 30.

Further, operating as clutch means for transmitting engine power, the first clutch 8 is interposed between the ring gear 32 of the first simple planetary gear set 28 and the input shaft 24, the second clutch 10 is interposed between a planetary carrier 34 of the second simple planetary gear set 30 and the input shaft 24, and the third clutch 12 is interposed between a ring gear 36 of the second simple planetary gear set 30 and the input shaft 24.

As a result of the above, through the selective operation of the first, second, and third clutches 8, 10, and 12, elements connected to these clutches come to be operated as input elements.

Also, forming the brake means, a first brake 14 is interposed between a connecting member 40, which connects the sun gear 38 of the first simple planetary gear set 28 and the planetary carrier 34 of the second simple planetary gear set 30, and a transmission housing 42; and a second brake 16 is interposed between the ring gear 36 of the second simple planetary gear set 30 and the transmission housing 42 to allow the above elements to operate as a reaction elements. A planetary carrier 44 of the first simple planetary gear set 28 is connected to the output shaft 26 to enable operation as an output element, and an output gear 46 is mounted to a front end of an output shaft of the above planetary carrier 44.

That is, in the first embodiment of the present invention, as the sun gear 38 of the first simple planetary gear set 28 and the planetary carrier 34 of the second simple planetary gear set 30 are connected through the connecting member 40, there are a total of four operational elements together with the remaining operational elements, and these operational elements are connected to the clutches and brakes.

Multi-plate clutches can be used for the first, second, and third clutches 8, 10, and 12 forming the clutch means, and band brakes can be used for the first and second brakes 14 and 16 forming the brake means.

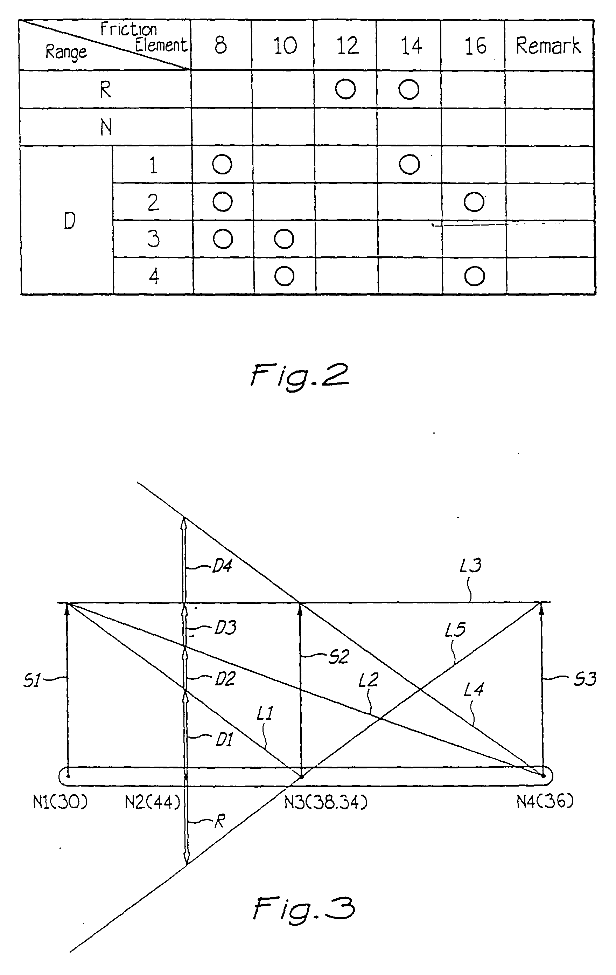

As shown in the friction element operational chart of Fig. 2, in the gear train of the present invention structured as in the above, friction elements are operated to realize shifting. The shift process will be explained hereinafter using the operation chart of Fig. 2 and the lever analogy diagram of Fig. 3.

In the lever shown in Fig. 3, a first node N1 indicates a ring gear of the first simple planetary gear set 28 combining with a sun gear of the second simple planetary gear set 30. A second node N2 indicates a planetary carrier of the first simple planetary gear set 28. A third node N3 indicates the sun gear 38 of the first simple planetary gear set 28 and the planetary carrier 34 of the second simple planetary gear set 30. A fourth node N4 indicates the ring gear 36 of the second simple planetary gear set 28.

In the operational process of a forward first speed, the first clutch 8 and the first brake 14 are controlled to operate. When this happens, the power of the input shaft 24 which is rotated through driving force received from the engine 2 makes the ring gear 32 of the first simple planetary gear set 28 operate as in input element through the operation of the first clutch 8, and, at the same time, the sun gear 38 of the first simple planetary gear set 28 and the planetary carrier 34 of the second simple planetary gear set 30 act as reaction elements through the operation of the first brake 14. Through the above operations, first speed shifting is realized, and through the planetary carrier 44 of the first simple planetary gear set 28, output is realized.

Referring to Fig. 3, with regard to the shift process of a first speed, a line connecting the second node N2 to a point on a line L1 connecting a first input speed line S1, inputted at the first node N1, to the third node N3, acting as the reaction element, becomes a first speed output line D1.

Therefore, an output number of rotations becomes much smaller than an input number of rotations, and a reduction in speed is realized through a first speed shift ratio.

In the above first speed state, if vehicle speed and throttle opening are increased, a transmission control unit (TCU) disengages the first brake 14 and operates the second brake 16.

As a result, starting from the input state as in the first speed, by the operation of the second brake 16, the ring gear 36 of the second simple planetary gear set 30 operates as a reaction element, and second speed shifting is realized.

Referring to Fig. 3, with regard to the shift process of a second speed, a line connecting the second node N2 to a point on a line L2 connecting a first input speed line S1, inputted at the first node N1, to the fourth node N4, acting as the reaction element, becomes a second speed output line D2, realizing output having a higher speed than the first speed.

In the above second speed state, if vehicle speed and throttle opening are increased, the TCU disengages the second brake 16 and operates the second clutch 10.

As a result, starting from the input state of the second speed, by the operation of the second clutch 10, second input is realized such that there are two input elements, enabling the realization of third speed shifting.

Referring to Fig. 3, with regard to the shift process of a third speed, a line connecting the second node N2 to a point on a line L3 connecting a first input speed line S1, inputted at the first node N1, to the third node N3, acting as an input element, becomes a third speed output line D3.

In the above third speed state, if vehicle speed and throttle opening are increased, the TCU disengages the first clutch 8, operating in the third speed, and operates the second brake 16.

As a result, first input is released, and by the operation of the second brake 16, the ring gear 36 of the second simple planetary gear set 30 operates as a reaction element, realizing fourth speed shifting.

Referring to Fig. 3, with regard to the shift process of a fourth speed, a line connecting the second node N2 to a point on a line L4 connected to the fourth node N4, acting as a reaction element, becomes a fourth speed output line D4.

Namely, in the above fourth speed, an overdrive state occurs wherein output speed is faster than input speed.

Also, if a driver changes a selector lever to a reverse R range, the third clutch 12 and the first brake 14 are controlled to be engaged.

When the above happens, input is realized through the ring gear 36 of the second simple planetary gear set 30 through the operation of the third clutch 12, and, through the operation of the first brake 14, the sun gear 32 of the first simple planetary gear set 28 and the planetary carrier 34 of the second simple planetary gear set 30 come to operate as reaction elements to realize reverse R shifting. Also, output is realized through the planetary carrier 44 of the first simple planetary gear set 28.

Referring to Fig. 3, a line connecting the second node N2 to a point on a line L5 connected to the third node N3, acting as reaction element, becomes a reverse speed output line R.

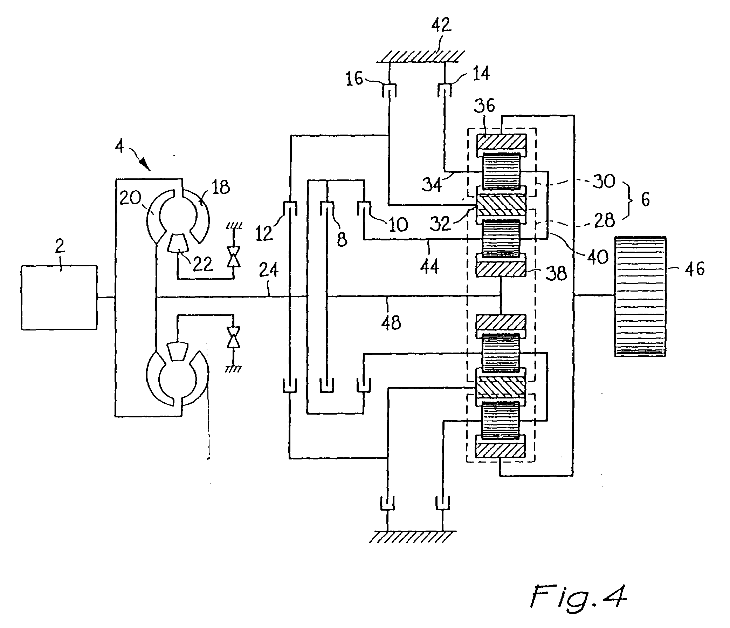

Referring now to Fig. 4, there is shown a schematic diagram of a gear train according to a second embodiment of the present invention. In the second embodiment, the planetary carriers 44 and 34 of the first and second simple planetary gear sets 28 and 30 are connected to each other to act as a single operational element, and the connection of the operational elements to the clutches is done differently than in the first embodiment.

Also, the compound planetary gear set 6 is mounted to a power transmission member 48 fixed aligned to a rear side of the input shaft 24, connected to the turbine runner 20 of the torque converter 4.

Further, operating as a clutch means for transmitting power of the engine 2 to the compound planetary gear set 6, the first clutch 8 is interposed between a power transmitting member 48, formed integrally with the sun gear 38 of the first simple planetary gear set 28, and the input shaft 24; the second clutch 10 is interposed between the planetary carrier 44 of the first simple planetary gear set 28 and the input shaft 24; and the third clutch 12 is interposed between the ring gear 32 of the first simple planetary gear set 28 and the input shaft 24.

As a result, through the selective operation of the clutches 8, 10, and 12, one or two of the elements 38, 44, and 32 connected to clutches 8, 10, and 12 are made to operate as input elements.

As stated above, the second clutch 10 is connected with the planetary carrier 44 of the first simple planetary gear set 28. Also, the second clutch 10 comes to be connected to the planetary carrier 34 of the second simple planetary gear set 30 through the connecting member 40.

In addition, forming the brake means, the first brake 14 is interposed between the ring gear 32 of the first simple planetary gear set 28 and the transmission housing 42, the second brake 16 is interposed between the planetary carrier 34 of the second simple planetary gear set 30 and the transmission housing 42 to allow the above elements to operate as reaction elements, and the output shaft 26, having an output gear 46 mounted on an end portion thereof, is connected to the ring gear 36 of the second simple planetary gear set 30 and, therefore, enables it to act as an output element.

In the gear train of the second preferred embodiment structured as in the above, the friction elements are operated, as shown in the operational chart of Fig. 2, to realize shifting. In the forward first speed, the first clutch 8 and the first brake 14 are controlled to be operated. When this happens, the power of the input shaft 24 which rotates by the engine 2 makes the sun gear 38 of the first simple planetary gear set 28 operate as an input element by the operation of the first clutch 8. At the same time, the planetary carriers 44 and 34 of the first and second simple planetary gear sets 28 and 30 are made to act as reaction elements by the operation of the first brake. Through the above operations, first speed shifting is realized, and through the ring gear 36 of the simple planetary gear set 30, output is realized.

If vehicle speed and throttle opening are increased in the above first speed state, the TCU disengages the first brake 14 and operates the second brake 16.

As in the first speed input state, reaction elements are realized by the operation of the second brake 16 through the ring gear 32 of the first simple planetary gear set 28, and second speed shifting is realized.

If vehicle speed and throttle opening are increased in the above second speed state, the TCU disengages the second brake 16 and operates the second clutch 10.

When this is done in the second speed, second input is realized according to the operation of the second clutch 10, and as there comes to be two input elements, third speed shifting is realized.

In the above third speed state, if vehicle speed and throttle opening are further increased, the TCU disengages the first clutch 8, operating in the third speed, and controls the second brake 16 to operate.

When the above operations are performed, first input is released, and the ring gear 32 of the first simple planetary gear set 28 operates as a reaction element, realizing fourth speed shifting. In the fourth speed, an overdrive state is realized in which output speed is faster than input speed.

Also, if the driver changes the selector lever to a reverse R range, the TCU operates the third clutch 12 and the first brake 14.

When the above is performed, input is realized through the ring gear 32 of the first simple planetary gear set 28 by the operation of the third clutch 12, and, at the same time, by the operation of the first brake 14, the planetary carriers 44 and 34 of the first and second simple planetary gear sets 28 and 30 operate as reaction elements to realize reverse shifting, and output is realized through the ring gear 36 of the second simple planetary gear set 30.

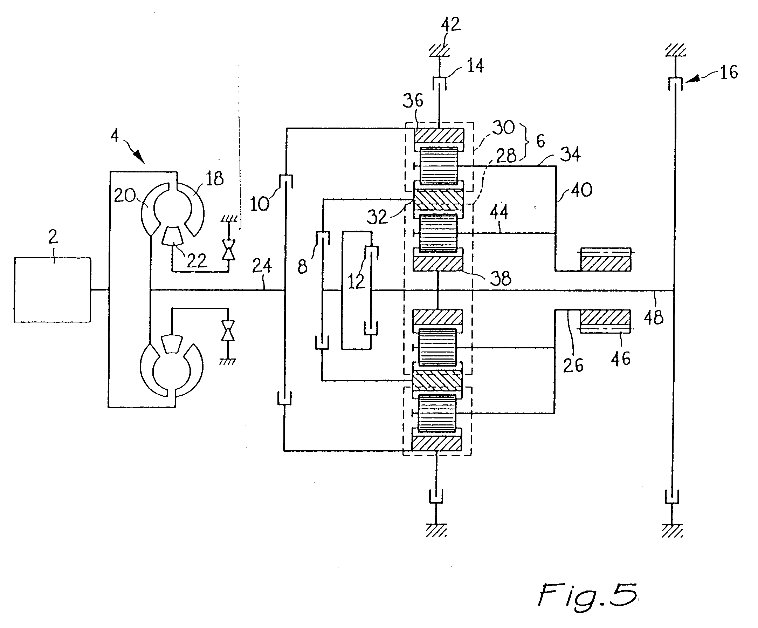

Referring now to Fig. 5, there is shown a schematic diagram of a gear train according to a third embodiment of the present invention. In the third embodiment, the planetary carriers 44 and 34 of the first and second simple planetary gear sets 28 and 30 are connected to each other to act as a single operational element, and an end part thereof is connected to the output shaft 26 to allow for operation as an output element, and the connection of the operational elements to the clutches are done differently than in the first embodiment.

Also, operating as a clutch means for transmitting power of the engine 2 to the compound planetary gear set 6, the first clutch 8 is interposed between the ring gear 32 of the first simple planetary gear set 28 and the input shaft 24, the second clutch 10 is interposed between the ring gear 36 of the second simple planetary gear set 30 and the input shaft 24, and the third clutch 12 is interposed between the sun gear 38 of the first simple planetary gear set 28 and the input shaft 24.

As a result, through the selective operation of the clutches 8, 10, and 12, one or two of the elements 32, 36, and 38 connected to clutches 8, 10, and 12 are made to operate as input elements.

In addition, forming the brake means, the first brake 14 is interposed between the ring gear 36 of the second simple planetary gear set 30 and the transmission housing 42, and the second brake 16 is interposed between the sun gear 38 of the first simple planetary gear set 28 and the transmission housing 42 to allow the above elements to selectively operate as reaction elements.

In the gear train of the third preferred embodiment structured as in the above, the friction elements are operated, as shown in the operational chart of Fig. 2, to realize shifting.

In the forward first speed, the first clutch 8 and the first brake 14 are controlled to be operated. When this is done, the power of the input shaft 24 which rotates by the engine 2 makes the ring gear 32 of the first simple planetary gear set 28 operate as an input element by the operation of the first clutch 8, and, at the same time, the ring gear 36 of the second simple planetary gear set 30 to act as reaction elements by the operation of the first brake 14. Through the above operations, first speed shifting is realized, and through the planetary carriers 44 and 34 of the first and second simple planetary gear sets 28 and 30, output is realized.

If vehicle speed and throttle opening are increased in the above first speed state, the TCU disengages the first brake 14 and operates the second brake 16.

As in the first speed input state, reaction elements are changes to the sun gear 38 of the first simple planetary gear set 28, and second speed shifting is realized.

If vehicle speed and throttle opening are increased in the above second speed state, the TCU disengages the second brake 16 and operates the second clutch 10.

When this is done in the second speed, as second input is realized according to the operation of the second clutch 10, there comes to be two input elements, realizing third speed shifting.

In the above third speed state, if vehicle speed and throttle opening are further increased, the TCU disengages the first clutch 8, operating in the third speed, and controls the second brake 16 to operate.

When the above operations are performed, first input is released, and the sun gear 38 of the first simple planetary gear set 28 operates as a reaction element, through operation of the second brake 16, realizing fourth speed shifting. In the fourth speed, an overdrive state is realized in which output speed is faster than input speed.

Also, if the driver changes the selector lever to the reverse R range, the TCU operates the third clutch 12 and the first brake 14.

When the above operation is performed, input is realized through the sun gear 38 of the first simple planetary gear set 28 by the operation of the third clutch 12, and, at the same time, by the operation of the first brake 14, the ring gear 36 of the second simple planetary gear set 30 operates as a reaction element to realize reverse shifting.

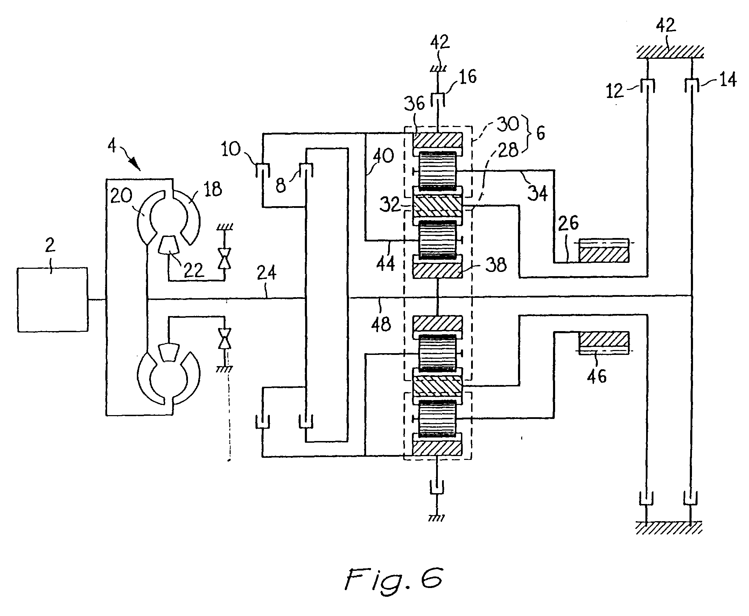

Referring now to Fig. 6, there is shown a schematic diagram of a gear train according to a fourth embodiment of the present invention. In the fourth embodiment, the planetary carrier 44 of the first simple planetary gear set 28 and the ring gear 36 of the second simple planetary gear set 30 are connected through the connecting member 40, and the output shaft 26 is connected to the planetary carrier 34 of the second simple planetary gear set 30 to operate as an output element.

Also, operating as a clutch means for transmitting power of the engine 2 to the compound planetary gear set 6, the first clutch 8 is interposed between the sun gear 38 of the first simple planetary gear set 28 and the input shaft 24, and the second clutch 10 is interposed between the planetary carrier 44 and the ring gear 36 of the first and second simple planetary gear sets 28 and 30, and the input shaft 24.

As a result, through the selective operation of the clutches 8 and 10, elements connected to the clutches 8 and 10 are selectively or simultaneously made to operate as input elements.

In addition, forming the brake means, the first brake 14 is interposed between the ring gear 32 of the first simple planetary gear set 28 and the transmission housing 42, the second brake 16 is interposed between the sun gear 38 of the first simple planetary gear set 28 and the transmission housing 42, and the third brake 16 is interposed between the ring gear 36 of the second simple planetary gear set 30 and the transmission housing 42 to allow the above elements to selectively operate as reaction elements.

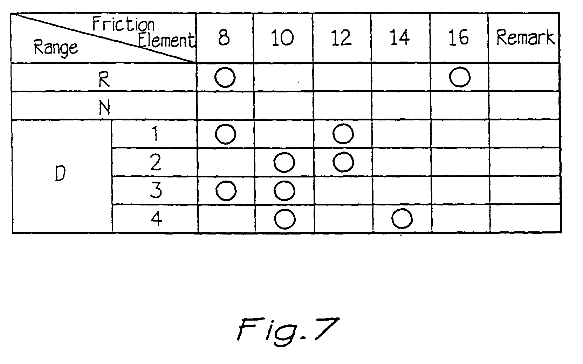

In the gear train of the fourth preferred embodiment structured as in the above, the friction elements are operated, as shown in the operational chart of Fig. 7, to realize shifting.

In the forward first speed, the first clutch 8 and the first brake 14 are controlled to be operated. When this is done, the power of the input shaft 24 which rotates by the engine 2 makes the sun gear 38 of the first simple planetary gear set 28 operate as an input element by the operation of the first clutch 8, and, at the same time, the ring gear 32 of the first simple planetary gear set 28 operate as a reaction element by the operation of the first brake 14. Through the above operations, first speed shifting is realized, and through the planetary carrier 34 of the second simple planetary gear sets 30, output is realized.

If vehicle speed and throttle opening are increased in the above first speed state, the TCU disengages the first brake 14 and operates the second brake 16.

Accordingly, input elements are realized through the planetary carrier 44 of the first simple planetary gear set 28 and the ring gear 36 of the second simple planetary gear set 30, realizing second speed shifting.

If vehicle speed and throttle opening are increased in the above second speed state, the TCU disengages the first clutch 8 and operates the second clutch 10.

When this is done in the second speed state, second input is realized by the first clutch 8 so as to have two input elements, realizing third speed shifting.

In the above third speed state, if vehicle speed and throttle opening are further increased, the TCU disengages the first clutch 8, operating in the third speed, and controls the second brake 14 to operate.

Accordingly, first input is released, the sun gear 38 of the first simple planetary gear set 28 operates as a reaction element by the operation of the second brake 14, realizing fourth speed shifting. In the fourth speed, an overdrive state is realized in which output speed is faster than input speed.

If the driver changes the selector lever to the reverse R range, the TCU controls the first clutch 8 and the third brake 16 to operate.

When the above operation is performed, input is realized through the sun gear 38 of the first simple planetary gear set 28 by the operation of the first clutch 8, and, at the same time, by the operation of the third brake 16, the ring gear 36 of the second simple planetary gear set 30 operates as a reaction element to realize reverse shifting.

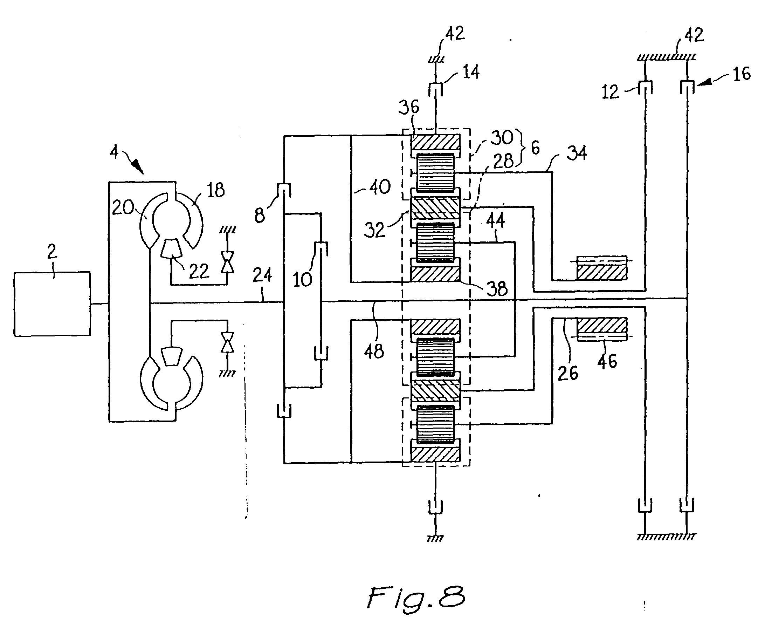

Referring now to Fig. 8, there is shown a schematic diagram of a gear train according to a fifth embodiment of the present invention. In the fifth embodiment, the sun gear 38 of the first simple planetary gear set 28 and the ring gear 36 of the second simple planetary gear set 30 are connected through the connecting member 40, and the output shaft 26 is connected to the planetary carrier 34 of the second simple planetary gear set 30 to operate as an output element. The compound planetary gear set 6 is mounted on the power transmitting member 48 provided aligned with the input shaft 24.

Also, operating as a clutch means for transmitting power of the engine 2 to the compound planetary gear set 6, the first clutch 8 is interposed between the connecting member 40, connecting the sun gear 38 of the first simple planetary gear set 28 and the ring gear 36 of the second simple planetary gear set 30 and the input shaft 24, and the second clutch 10 is interposed between the planetary carrier 44 of the first simple planetary gear set 28 and the input shaft 24.

As a result, through the selective operation of the clutches 8 and 10, the elements 38 and 40 connected to the clutches 8 and 10 are selectively or simultaneously made to operate as input elements.

In addition, forming the brake means, the first brake 14 is interposed between the ring gear 32 of the first simple planetary gear set 28 and the transmission housing 42, the second brake 16 is interposed between the ring gear 36 of the second simple planetary gear set 30 and the transmission housing 42, and the third brake 16 is interposed between the power transmitting member 48 connected to the planetary carrier 44 of the first simple planetary gear set 28 and the transmission housing 42 to allow the above elements to selectively operate as reaction elements.

In the gear train of the fifth preferred embodiment structured as in the above, the friction elements are operated, as shown in the operational chart of Fig. 7, to realize shifting.

In the forward first speed, the first clutch 8 and the first brake 12 are controlled to be operated. When this is done, the power of the input shaft 24 which rotates by the engine 2 makes the sun gear 38 of the first simple planetary gear set 28 and the ring gear 36 of the second simple planetary gear set 30 operate as input elements by the operation of the first clutch 8, and, at the same time, the ring gear 32 of the first simple planetary gear set 28 operate as a reaction element by the operation of the first brake 12. Through the above operations, first speed shifting is realized, and through the planetary carrier 34 of the second simple planetary gear sets 30, output is realized.

If vehicle speed and throttle opening are increased in the above first speed state, the TCU disengages the first brake 14 and operates the second brake 16.

Accordingly, in the second speed state, second input is realized by the operation of the first clutch 8 such that there are two input elements, realizing third speed shifting.

If vehicle speed and throttle opening are increased in the above third speed state, the TCU disengages the first clutch 8, operating in the third speed, and operates the second clutch 10.

When this is done, first input is released, the ring gear 36 of the second simple planetary gear set 30 operates as a reaction element, realizing fourth speed shifting.

If the driver changes the selector lever to the reverse R range, the TCU controls the first clutch 8 and the third brake 16 to operate.

When the above operation is performed, input is realized through the sun gear 38 of the first simple planetary gear set 28 and the ring gear 36 of the second simple planetary gear set 30 by the operation of the first clutch 8, and, at the same time, by the operation of the third brake 16, the planetary carrier 44 of the first simple planetary gear set 28 operates as a reaction element to realize reverse shifting.

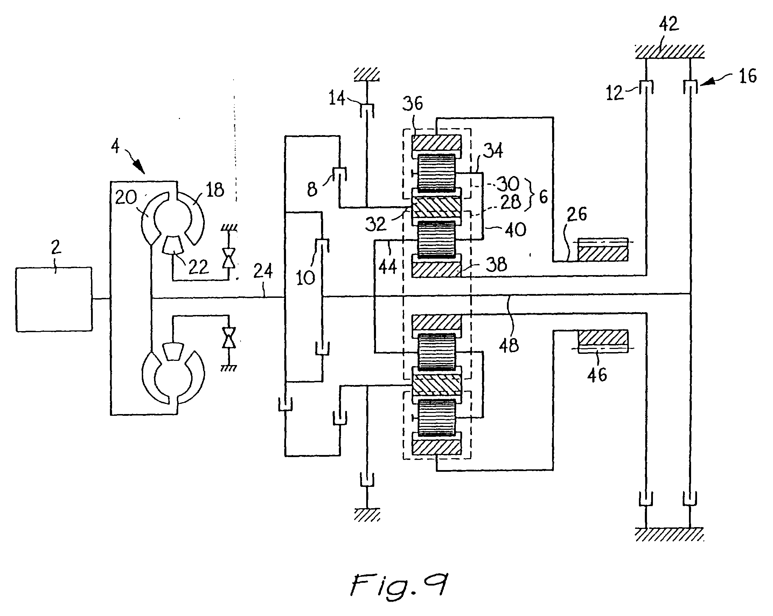

Referring to Fig. 9, there is shown a schematic diagram of a gear train according to a sixth embodiment of the present invention. In the sixth embodiment, the planetary carriers 44 and 34 of the first and second simple planetary gear sets 28 and 30 are connected to each other through the connecting member 40, and the output shaft 26 is connected to the ring gear 36 of the second simple planetary gear set 30 to operate as an output element. The compound planetary gear set 6 is mounted on the power transmitting member 48 provided aligned with the input shaft 24.

Also, operating as a clutch means for transmitting power of the engine 2 to the compound planetary gear set 6, the first clutch 8 is interposed between the ring gear 32 of the first simple planetary gear set 28 and the input shaft 24, and the second clutch 10 is interposed between the planetary carrier 34 of the second simple planetary gear set 28 and the input shaft 24.

As a result, through the selective operation of the clutches 8 and 10, the elements 38 and 40 connected to the clutches 8 and 10 are selectively or simultaneously made to operate as input elements.

Of course, when the planetary carrier 44 of the first simple planetary gear set 28 operates as an input and reaction element, the planetary carrier 34 of the second simple planetary gear set 30 also operates as the same element.

In addition, forming the brake means, the first brake 14 is interposed between the sun gear 38 of the first simple planetary gear set 28 and the transmission housing 42, the second brake 16 is interposed between the ring gear 32 of the first simple planetary gear set 28 and the transmission housing 42, and the third brake 16 is interposed between the power transmitting member 48 connected to the planetary carrier 44 of the first simple planetary gear set 28 and the transmission housing 42 to allow the above elements to selectively operate as reaction elements.

In the gear train of the sixth preferred embodiment structured as in the above, the friction elements are operated, as shown in the operational chart of Fig. 7, to realize shifting.

In the forward first speed, the first clutch 8 and the first brake 12 are controlled to be operated. When this is done, the power of the input shaft 24 which rotates by the engine 2 makes the ring gear 32 of the first simple planetary gear set 28 operate as an input element by the operation of the first clutch 8, and, at the same time, the sun gear 38 of the first simple planetary gear set 28 operate as a reaction element by the operation of the first brake 12. Through the above operations, first speed shifting is realized, and through the ring gear 36 of the second simple planetary gear set 30, output is realized.

If vehicle speed and throttle opening are increased in the above first speed state, the TCU disengages the first clutch 8 and operates the second clutch.

Further, as the two planetary carriers 44 and 34 are connected to each other, they operate together and act as input elements.

If vehicle speed and throttle opening are increased in the above third speed state, the TCU disengages the first brake 12, and operates the first clutch 8.

When this is done, in the second speed input state, second input is released so that there are two input elements, realizing third speed shifting.

In the above third speed state, if vehicle speed and throttle opening are further increased, the TCU disengages the first clutch 8, operating in the third speed, and controls the second brake 14 to operate.

Accordingly, first input is released, the planetary carrier 44 of the first simple planetary gear set 28 operates as a reaction element by the operation of the second brake 14, realizing fourth speed shifting. In the fourth speed, an overdrive state is realized in which output speed is faster than input speed.

If the driver changes the selector lever to the reverse R range, the TCU controls the first clutch 8 and the third brake 16 to operate.

When the above operation is performed, input is realized through the ring gear 32 of the first simple planetary gear set 28 by the operation of the first clutch 8, and, at the same time, by the operation of the third brake 16, the planetary carrier 34 of the second simple planetary gear set 30 operates as a reaction element to realize reverse shifting, and output is realized through the ring gear 36 of the second simple planetary gear set 30.

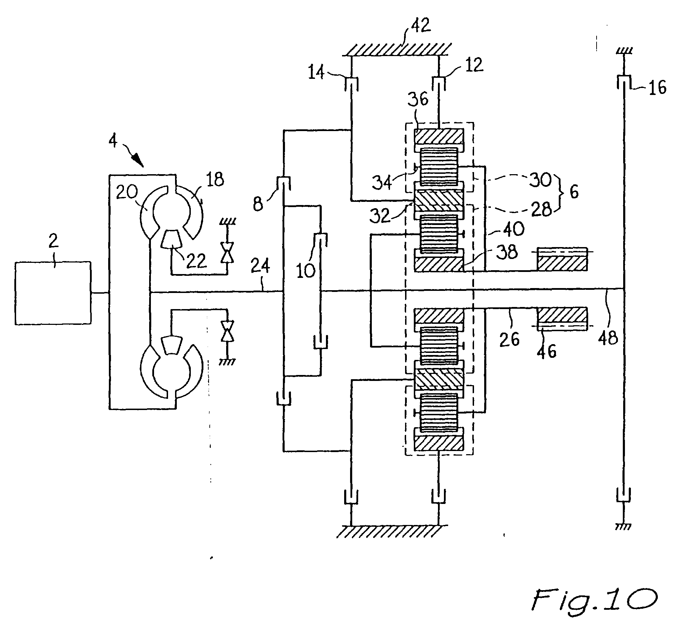

Referring to Fig. 10, there is shown a schematic diagram of a gear train according to a seventh embodiment of the present invention. In the seventh embodiment, the sun gear 38 of the first simple planetary gear set 28 and the planetary carrier 34 of the second simple planetary gear set 30 are connected through the connecting member 40 to which the output shaft 26 is connected to allow operating as an output element. The compound planetary gear set 6 is mounted on the power transmitting member 48 provided aligned with the input shaft 24.

Also, operating as a clutch means for transmitting power of the engine 2 to the compound planetary gear set 6, the first clutch 8 is interposed between the ring gear 32 of the first simple planetary gear set 28 and the input shaft 24, and the second clutch 10 is interposed between the planetary carrier 44 of the first simple planetary gear set 28 and the input shaft 24.

As a result, through the selective operation of the clutches 8 and 10, the elements 32 and 44 connected to the clutches 8 and 10 are selectively or simultaneously made to operate as input elements.

In addition, forming the brake means, the first brake 12 is interposed between the ring gear 36 of the second simple planetary gear set 30 and the transmission housing 42, the second brake 14 is interposed between the ring gear 38 of the first simple planetary gear set 28 and the transmission housing 42, and the third brake 16 is interposed between the power transmitting member 48 connected to the planetary carrier 44 of the first simple planetary gear set 28 and the transmission housing 42 to allow the above elements to selectively operate as reaction elements.

In the gear train of the seventh preferred embodiment structured as in the above, the friction elements are operated, as shown in the operational chart of Fig. 7, to realize shifting.

In the forward first speed, the first clutch 8 and the first brake 12 are controlled to be operated. When this is done, the power of the input shaft 24 rotated by the engine 2 makes the ring gear 32 of the first simple planetary gear set 28 operate as an input element by the operation of the first clutch 8, and, at the same time, the ring gear 36 of the second simple planetary gear set 30 operate as a reaction element by the operation of the first brake 12. Through the above operations, first speed shifting is realized, and through the sun gear 38 and planetary carrier 44 of the first and second simple planetary gear set 28 and 30, output is realized.

If vehicle speed and throttle opening are increased in the above first speed state, the TCU disengages the first clutch 8 and operates the second clutch 10.

In the input state as in the first speed, the input element is changed to the planetary carrier 44 of the first simple planetary gear seat 28 to realize shifting into the second speed.

If vehicle speed and throttle opening are increased in the above second speed state, the TCU disengages the first brake 12, and operates the first clutch 8.

When this is done, in the second speed input state, second input is released, according to the operation of the first clutch 8, so that there are two input elements, realizing third speed shifting.

In the above third speed state, if vehicle speed and throttle opening are further increased, the TCU disengages the first clutch 8, operating in the third speed, and controls the second brake 14 to operate.

Accordingly, first input is released, and the ring gear 32 of the first simple planetary gear set 28 operates as a reaction element by the operation of the second brake 14, realizing fourth speed shifting. In the fourth speed, an overdrive state is realized in which output speed is faster than input speed.

If the driver changes the selector lever to the reverse R range, the TCU controls the first clutch 8 and the third brake 16 to operate.

When the above is performed, input is realized through the ring gear 32 of the first simple planetary gear set 28 by the operation of the first clutch 8, and, at the same time, by the operation of the third brake 16, the planetary carrier 44 of the first simple planetary gear set 28 operates as a reaction element to realize reverse shifting.

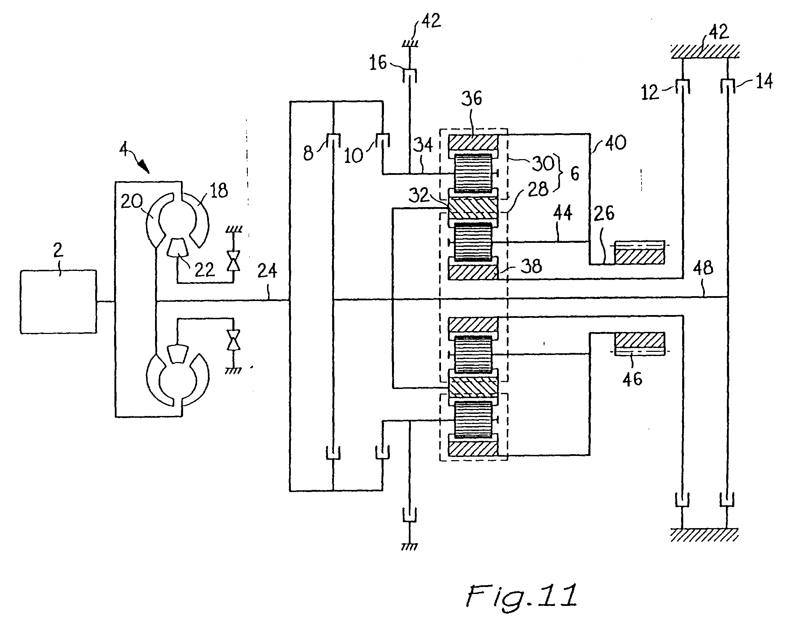

Referring to Fig. 11, there is shown a schematic diagram of a gear train according to an eighth embodiment of the present invention. In the eighth embodiment, the planetary carrier 44 of the first simple planetary gear set 28 and the ring gear 36 of the second simple planetary gear set 30 are connected through the connecting member 40 to which the output shaft 26 is connected to allow operating as an output element. The compound planetary gear set 6 is mounted on the power transmitting member 48 provided aligned with the input shaft 24.

Also, operating as a clutch means for transmitting power of the engine 2 to the compound planetary gear set 6, the first clutch 8 is interposed between the ring gear 32 of the first simple planetary gear set 28 and the input shaft 24, and the second clutch 10 is interposed between the planetary carrier 34 of the second simple planetary gear set 30 and the input shaft 24.

As a result, through the selective operation of the clutches 8 and 10, the elements connected to the first and second clutches 8 and 10 are selectively or simultaneously made to operate as input elements.

In addition, forming the brake means, the first brake 12 is interposed between the sun gear 38 of the first simple planetary gear set 28 and the transmission housing 42, the second brake 14 is interposed between the ring gear 32 of the first simple planetary gear set 28 and the transmission housing 42, and the third brake 16 is interposed between the planetary carrier 34 of the second simple planetary gear set 30 and the transmission housing 42 to allow the above elements to selectively operate as reaction elements.

In the gear train of the eighth preferred embodiment structured as in the above, the friction elements are operated, as shown in the operational chart of Fig. 7, to realize shifting.

In the forward first speed, the first clutch 8 and the first brake 12 are controlled to be operated. When this is done, the power of the input shaft 24 rotated by the engine 2 makes the ring gear 32 of the first simple planetary gear set 28 operate as an input element by the operation of the first clutch 8, and, at the same time, the sun gear 38 of the first simple planetary gear set 28 operate as a reaction element by the operation of the first brake 12. Through the above operations, first speed shifting is realized, and through the planetary carrier 44 of the first simple planetary gear set 28 and the ring gear 36 of the second simple planetary gear set 30, output is realized.

If vehicle speed and throttle opening are increased in the above first speed state, the TCU disengages the first clutch 8 and operates the second clutch 10.

If the above operations are performed, the input element is changed to the planetary carrier 34 of the second simple planetary gear set 28, and shifting into the second speed is realized. If vehicle speed and throttle opening are increased in the above second speed state, the TCU disengages the first brake 12, and operates the first clutch 8.

Accordingly, in the second speed input state, second input is realized, according to the operation of the first clutch 8, so that there are two input elements, realizing third speed shifting.

In the above third speed state, if vehicle speed and throttle opening are further increased, the TCU disengages the first clutch 8, operating in the third speed, and controls the second brake 14 to operate.

As a result, first input is released, and the ring gear 32 of the first simple planetary gear set 28 operates as a reaction element by the operation of the second brake 14, realizing fourth speed shifting. In the fourth speed, an overdrive state is realized in which output speed is faster than input speed.

If the driver changes the selector lever to the reverse R range, the TCU controls the first clutch 8 and the third brake 16 to operate.

When the above operation is performed, input is realized through the ring gear 32 of the first simple planetary gear set 28 by the operation of the first clutch 8, and, at the same time, by the operation of the third brake 16, the planetary carrier 44 of the second simple planetary gear set 30 operates as a reaction element to realize reverse shifting.

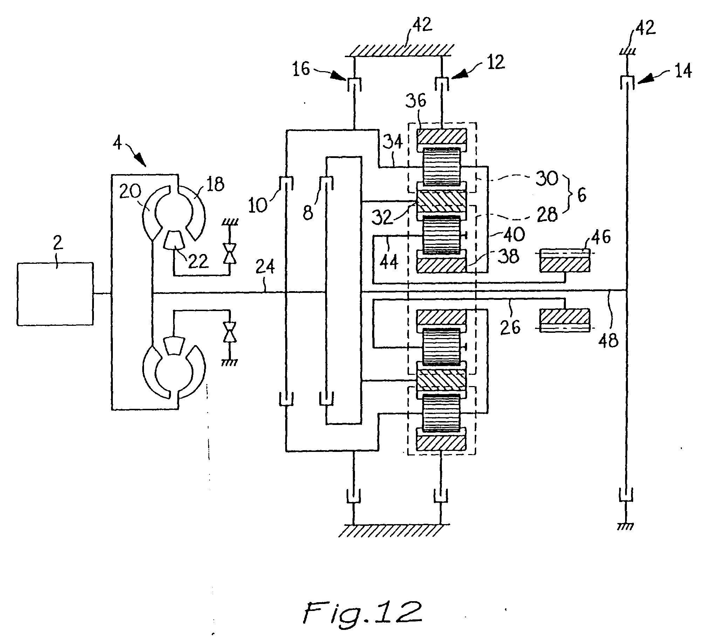

Referring to Fig. 12, there is shown a schematic diagram of a gear train according to a ninth embodiment of the present invention. In the ninth embodiment, the sun gear 38 of the first simple planetary gear set 28 and the planetary carrier 34 of the second simple planetary gear set 30 are connected through the connecting member 40, and the output shaft 26 is connected to the planetary carrier 44 of the first simple planetary gear set 28 to allow operating as an output element. The compound planetary gear set 6 is mounted on the power transmitting member 48 provided aligned with the input shaft 24.

Also, operating as a clutch means for transmitting power of the engine 2 to the compound planetary gear set 6, the first clutch 8 is interposed between the ring gear 32 of the first simple planetary gear set 28 and the input shaft 24, and the second clutch 10 is interposed between the planetary carrier 34 of the second simple planetary gear set 30 and the input shaft 24.

As a result, through the selective operation of the clutches 8 and 10, the elements 32 and 34 connected to the first and second clutches 8 and 10 are selectively or simultaneously made to operate as input elements.

In addition, forming the brake means, the first brake 12 is interposed between the ring gear 36 of the second simple planetary gear set 30 and the transmission housing 42, the second brake 14 is interposed between the power transmitting member 48 connected to the ring gear 32 of the first simple planetary gear set 28 and the transmission housing 42, and the third brake 16 is interposed between the space between the second clutch 10 and planetary carrier 34 of the second simple planetary gear set 30 and the transmission housing 42 to allow the above elements to selectively operate as reaction elements.

In the gear train of the ninth preferred embodiment structured as described above, the friction elements are operated, as shown in the operational chart of Fig. 7, to realize shifting.

In the forward first speed, the first clutch 8 and the first brake 12 are controlled to be operated. When this is done, the power of the input shaft 24 rotated by the engine 2 makes the ring gear 32 of the first simple planetary gear set 28 operate as an input element by the operation of the first clutch 8. At the same time, the sun gear 38 and the planetary carrier 34 of the first and second simple planetary gear sets 28 and 30 operate as reaction elements by the operation of the first brake 12. Through the above, first speed shifting is realized, and through the planetary carrier 44 of the first simple planetary gear set 28, output is realized.

If vehicle speed and throttle opening are increased in the above first speed state, the TCU disengages the first clutch 8 and operates the second clutch 10.

In an input state as in the first speed, the input element is changed to the planetary carrier 34 of the second simple planetary gear set 30 by the operation of the second clutch 10, and shifting into the second speed is realized.

If vehicle speed and throttle opening are increased in the above second speed state, the TCU disengages the first brake 12, and operates the first clutch 8.

Accordingly, in the second speed input state, second input is realized, according to the operation of the first clutch 8, so that there are two input elements, realizing third speed shifting.

In the above third speed state, if vehicle speed and throttle opening are further increased, the TCU disengages the first clutch 8, operating in the third speed, and controls the second brake 14 to operate.

As a result, first input is released, and the ring gear 32 of the first simple planetary gear set 28 operates as a reaction element by the operation of the second brake 14, realizing fourth speed shifting.

If the driver changes the selector lever to the reverse R range, the TCU controls the first clutch 8 and the third brake 16 to operate.

When the above is performed, input is realized through the ring gear 32 of the first simple planetary gear set 28 by the operation of the first clutch 8, and, at the same time, by the operation of the third brake 16, the planetary carrier 34 of the second simple planetary gear set 30 operates as a reaction element to realize reverse shifting while output is realized through the planetary carrier 44 of the first simple planetary gear set 28.

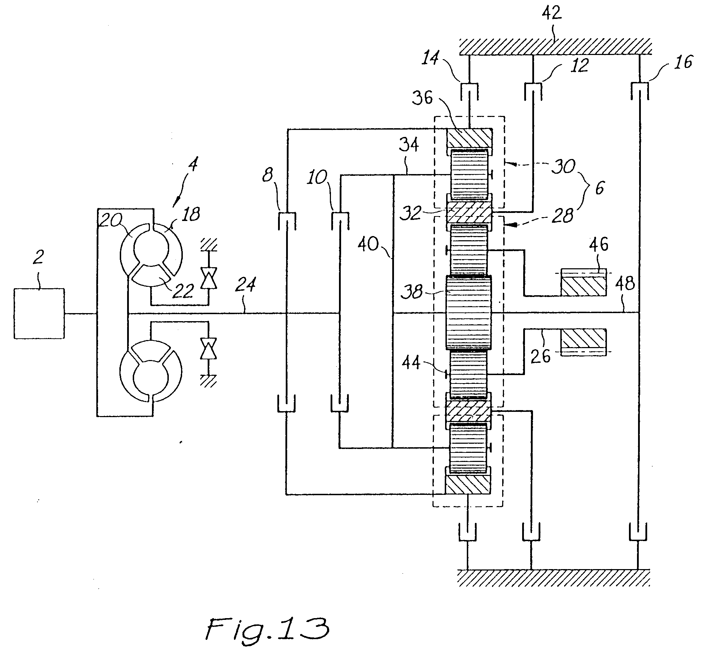

Referring to Fig. 13, there is shown a schematic diagram of a gear train according to a tenth embodiment of the present invention. In the tenth embodiment, the sun gear 38 of the first simple planetary gear set 28 and the planetary carrier 34 of the second simple planetary gear set 30 are connected through the connecting member 40 and able to act as input elements, and the output shaft 26 is connected to the planetary carrier 44 of the first simple planetary gear set 28 to allow for operating as an output element. The compound planetary gear set 6 is mounted on the power transmitting member 48 provided aligned with the input shaft 24.

Also, operating as a clutch means for transmitting power of the engine 2 to the compound planetary gear set 6, the first clutch 8 is interposed between the ring gear 36 of the second simple planetary gear set 30 and the input shaft 24, and the second clutch 10 is interposed between the planetary carrier 34 of the second simple planetary gear set 30 and the input shaft 24.

In the above, it is assumed that in the connection of the second clutch 10 to the planetary carrier 34 of the second simple planetary gear set 30, the sun gear 38 of the first simple planetary gear set 28 is also connected to the planetary carrier 34.

As a result of the different structures described above, through the selective operation of the clutches 8 and 10, the elements connected to the first and second clutches 8 and 10 are selectively or simultaneously made to operate as input elements.

In addition, forming the brake means, the first brake 12 is interposed between the ring gear 32 of the first simple planetary gear set 28 and the transmission housing 42, the second brake 14 is interposed between the ring gear 36 of the second simple planetary gear set 30 and the transmission housing 42, and the third brake 16 is interposed between the sun gear 38 of the first simple planetary gear set 28 and the transmission housing 42 to allow the above elements to selectively operate as reaction elements.

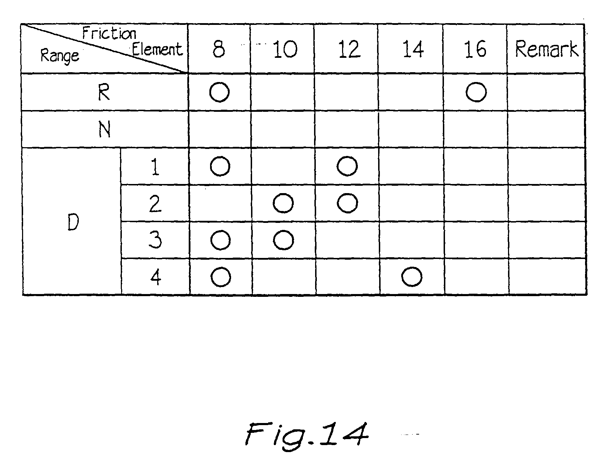

In the gear train of the tenth preferred embodiment structured as described above, the friction elements are operated, as shown in the operational chart of Fig. 14, to realize shifting.

In the forward first speed, the first clutch 8 and the first brake 12 are controlled to be operated. When this is done, the power of the input shaft 24 rotated by the engine 2 makes the ring gear 36 of the second simple planetary gear set 30 operate as an input element by the operation of the first clutch 8. At the same time, the ring gear 32 of the first simple planetary gear set 28 operates as a reaction element by the operation of the first brake 12. As a result, output is realized through the planetary carrier 44 of the first simple planetary gear set 28.

If vehicle speed and throttle opening are increased in the above first speed state, the TCU disengages the first clutch 8 and operates the second clutch 10.

In a first speed input state as described above, input is realized through the planetary carrier 34 of the second simple planetary gear set 30 and through the sun gear 38 of the first simple planetary gear set 28, and shifting into the second speed is realized.

If vehicle speed and throttle opening are increased in the above second speed state, the TCU disengages the first brake 12, and operates the first clutch 8.

Accordingly, in the second speed input state, second input is realized, according to the operation of the first clutch 8, so that there are two input elements, realizing third speed shifting.

In the above third speed state, if vehicle speed and throttle opening are further increased, the TCU disengages the second clutch 10, operating in the third speed, and controls the second brake 14 to operate.

As a result, first input is released, and the ring gear 38 of the second simple planetary gear set 30 operates as a reaction element by the operation of the second brake 14, realizing fourth speed shifting. In the fourth speed, an overdrive state occurs wherein output speed is faster than input speed.

If the driver changes the selector lever to the reverse R range, the TCU controls the first clutch 8 and the third brake 16 to operate.

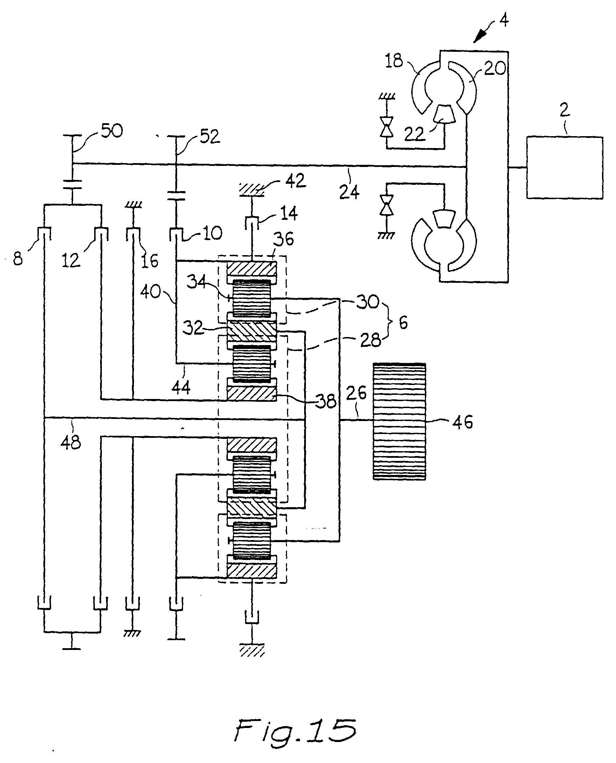

When the above is performed, input is realized through the ring gear 36 of the second simple planetary gear set 30 by the operation of the first clutch 8. At the same time, by the operation of the third brake 16, the sun gear 38 of the first simple planetary gear set 28 and the planetary carrier 34 of the second simple planetary gear set 30 operate as reaction elements to realize reverse shifting while output is realized through the planetary carrier 44 of the first simple planetary gear set 28. Referring to Fig. 15, there is shown a schematic diagram of a gear train according to an eleventh embodiment of the present invention. In the tenth embodiment, the input shaft 24 and the output shaft 26 are mounted aligned to one another, but in the eleventh embodiment they are mounted parallel to each other.

The sun gear 38 of the first simple planetary gear set 28 and the ring gear 36 of the second simple planetary gear set 30 are connected through the connecting member 40, and together with the sun gear 38 and the ring gear 32 of the first simple planetary gear set 28 and the planetary carrier 40 of the second simple planetary gear set 30, there are four operational elements. Also, the output shaft 26 is connected to the planetary carrier 34 of the second simple planetary gear set 30 to allow for operating as an output element.

Further, the ring gear 32 and sun gear 38 of the first simple planetary gear set 28, and the planetary carrier 34 of the first simple planetary gear set 28 and ring gear 36 of the second simple planetary gear set 30 are connected to first and second gears 50 and 52, with the input shaft 24 inserted in a location before the connections.

Also, operating as a clutch means for transmitting power of the engine 2 to the compound planetary gear set 6, the first clutch 8 is interposed between the power transmission member 48 connected to the ring gear 32 of the first simple planetary gear set 28 and the first gear 50, the second clutch 10 is interposed between both the planetary carrier 44 of the first simple planetary gear set 28 and the ring gear 36 of the second simple planetary gear set 30 and the second gear 52, and the third clutch 12 is interposed between the sun gear 38 of the first simple planetary gear set 28 and the first gear 50.

Accordingly, through the selective operation of the clutches 8, 10, and 12, the elements 32, 44, 36, and 38 connected to the clutches 8, 10, and 12 are selectively or simultaneously (two at a time) made to operate as input elements.

The ability to transmit power from the first gear 50, formed on the input shaft 24, by the ring gear 32 and the sun gear 38 of the first simple planetary gear set 28 is possible because the first and third clutches 8 and 12 are connected to the first gear 50 in a state where they are first connected to each other.

In addition, forming the brake means, the first brake 12 is interposed between the ring gear 36 of the second simple planetary gear set 30 and the transmission housing 42, and the second brake 14 is interposed between the sun gear 38 of the first simple planetary gear set 28 and the transmission housing 42 to allow the above elements to selectively operate as reaction elements.

In the gear train of the eleventh preferred embodiment structured as in the above, the friction elements are operated, as shown in the operational chart of Fig. 7, to realize shifting.

In the forward first speed, the first clutch 8 and the first brake 12 are controlled to be operated. When this is done, the power of the input shaft 24 rotated by the engine 2 makes the ring gear 38 of the first simple planetary gear set 28 operate as an input element by the operation of the first clutch 8. At the same time, the planetary carrier 44 and the ring gear 36 of the first and second simple planetary gear sets 28 and 30 operate as reaction elements by the operation of the first brake 12, realizing first speed shifting. As a result, output is realized through the planetary carrier 34 of the second simple planetary gear set 30.

If vehicle speed and throttle opening are increased in the above first speed state, the TCU disengages the first brake 14 and operates the second brake 16.

In a first speed input state as in the above, the reaction element is realized through the sun gear 38 of the first simple planetary gear set 28, allowing shifting into the second speed to be realized.

If vehicle speed and throttle opening are increased in the above second speed state, the TCU disengages the second brake 16, and operates the second clutch 10.

Accordingly, in the second speed input state, second input is realized, according to the operation of the second clutch 10, so that there are two input elements, realizing third speed shifting.

In the above third speed state, if vehicle speed and throttle opening are further increased, the TCU disengages the first clutch 8, operating in the third speed, and controls the second brake 16 to operate.

As a result, first input is released, and the sun gear 38 of the first simple planetary gear set 28 operates as a reaction element by the operation of the second brake 14, realizing fourth speed shifting. In the fourth speed, an overdrive state occurs wherein output speed is faster than input speed.

If the driver changes the selector lever to the reverse R range, the TCU controls the third clutch 12 and the first brake 14 to operate.

When the above is performed, input is realized through the sun gear 38 of the first simple planetary gear set 28 by the operation of the third clutch 12. At the same time, by the operation of the first brake 14, the planet carrier 44 and ring gear 36 of the first and second simple planetary gear sets 28 and 30 operate as reaction elements to realize reverse shifting, and output is realized through the planetary carrier 34 of the second simple planetary carrier 30.

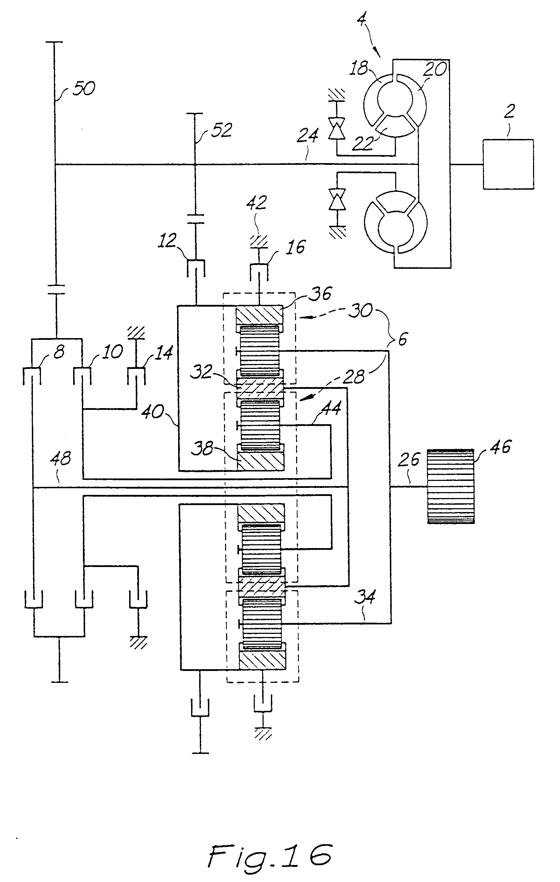

Referring to Fig. 16, there is shown a schematic diagram of a gear train according to a twelfth embodiment of the present invention. In the twelfth embodiment, the input shaft 24 and the output shaft 26 are mounted parallel to each other.

The sun gear 38 and the ring gear 36 of the first and second simple planetary gear sets 28 and 30 are connected through the connecting member 40. Together with both the planetary carrier 44 and ring gear 38 of the first simple planetary gear set 28 and the planetary carrier 34 of the second simple planetary gear set 30, there are four operational elements. Also, the output shaft 26 is connected to the planetary carrier 34 of the second simple planetary gear set 30 to allow for operating as an output element.

Further, the ring gear 38 and the planetary carrier 44 of the first simple planetary gear set 28 are connected to the input shaft 24 through the first gear 50, and the sun gear 38 of the first simple planetary gear set 28 and the ring gear 36 of the second simple planetary gear set 30 are connected to the input shaft 24 by the second gear 52. By the above, the transmission of power is realized.

Also, operating as a clutch means for transmitting power of the engine 2 to the compound planetary gear set 6, the first clutch 8 is interposed between the first gear 42 and the ring gear 32 of the first simple planetary gear set 28, the second clutch 10 is interposed between the first gear 42 and the planetary carrier 44 of the first simple planetary gear set 28, and the third clutch 12 is interposed between the second gear 52 and the ring gear 36 of the second simple planetary gear set 30.

Accordingly, through the selective operation of the clutches 8, 10, and 12, the elements connected to the clutches 8, 10, and 12 are selectively or simultaneously (two at a time) made to operate as input elements.

In the above interposition of the third clutch 12 between the second gear 52 and the ring gear 36 of the second simple planetary gear set 30, as the ring gear 36 is connected with the sun gear 38 of the first simple planetary gear set 28, power transmitted to the sun gear 38 can be controlled.

In addition, forming the brake means, the first brake 14 is interposed between the planetary carrier 44 of the first simple planetary gear set 28 and the transmission housing 42, and the second brake 16 is interposed between the ring gear 36 of the second simple planetary gear set 30 and the transmission housing 42 to allow the above elements to selectively operate as reaction elements. The planetary carrier 34 of the second simple planetary gear set 30 is connected to the output shaft 26 to which the output gear 46 is connected to allow operation as an output element.

In the gear train of the twelfth preferred embodiment structured as in the above, the friction elements are operated, as shown in the operational chart of Fig. 7, to realize shifting.

In the forward first speed, the first clutch 8 and the first brake 14 are controlled to be operated. When this is done, the power of the input shaft 24 rotated by the engine 2 makes the ring gear 32 of the first simple planetary gear set 28 operate as an input element by the operation of the first clutch 8. At the same time, the planetary carrier 44 of the first simple planetary gear set 28 operates as a reaction element by the operation of the first brake 14, realizing first speed shifting. As a result, output is realized through the planetary carrier 34 of the second simple planetary gear set 30.

If vehicle speed and throttle opening are increased in the above first speed state, the TCU disengages the first brake 14 and operates the second brake 16.

In a first speed input state as in the above, the reaction element is realized through the ring gear 36 of the second simple planetary gear set 30, allowing shifting into the second speed to be realized.

If vehicle speed and throttle opening are increased in the above second speed state, the TCU disengages the second brake 16, and operates the second clutch 10.

Accordingly, in the second speed input state, second input is realized, according to the operation of the second clutch 10, so that there are two input elements, realizing third speed shifting.

In the above third speed state, if vehicle speed and throttle opening are further increased, the TCU disengages the first clutch 8, operating in the third speed, and controls the second brake 16 to operate.

As a result, first input is released, and the ring gear 32 of the first simple planetary gear set 28 operates as a reaction element by the operation of the second brake 16, realizing fourth speed shifting.

If the driver changes the selector lever to the reverse R range, the TCU controls the third clutch 12 and the first brake 14 to operate.

When the above operation is performed, input is realized through the sun gear 38 of the first simple planetary gear set 28 and the ring gear 36 of the second simple planetary gear set 30 by the operation of the third clutch 12. At the same time, by the operation of the first brake 14, the planet carrier 44 of the first simple planetary gear set 28 operates as a reaction element to realize reverse shifting, and output is realized through the planetary carrier 34 of the second simple planetary carrier 30.

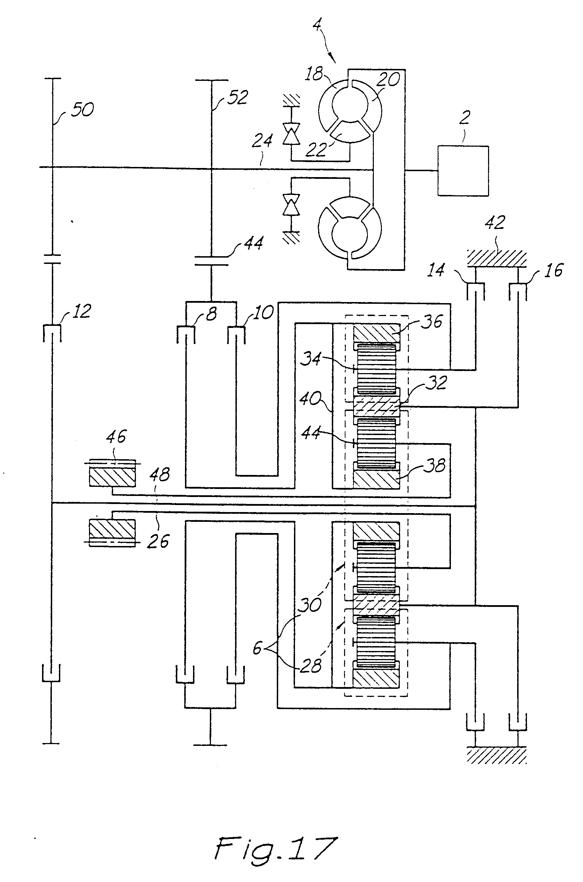

Referring to Fig. 17, there is shown a schematic diagram of a gear train according to a thirteenth embodiment of the present invention. In the thirteenth embodiment, as in the twelfth embodiment, the input shaft 24 and the output shaft 26 are mounted parallel to each other.

The sun gear 38 and the ring gear 36 of the first and second simple planetary gear sets 28 and 30 are connected through the connecting member 40. Together with both the planetary carrier 44 and ring gear 38 of the first simple planetary gear set 28 and the planetary carrier 34 of the second simple planetary gear set 30, there are four operational elements. Also, the output shaft 26 is connected to the planetary carrier 44 of the first simple planetary gear set 30 to allow for operating as an output element.

Further, the ring gear 38 of the first simple planetary gear set 28 is connected to the input shaft 24 through the first gear 50, and the sun gear 38 of the first simple planetary gear set 28 and the ring gear 36 of the second simple planetary gear set 30 are connected to the input shaft 24 by the second gear 52. By the above, the transmission of power is realized.

Also, operating as a clutch means for transmitting power of the engine 2 to the compound planetary gear set 6, the first clutch 8 is interposed between the second gear 52 and the sun gear 38 and ring gear 36 of the first and second simple planetary gear sets 28 and 30, the second clutch 10 is interposed between the second gear 52 and the planetary carrier 34 of the second simple planetary gear set 30, and the third clutch 12 is interposed between the first gear 50 and the ring gear 32 of the first simple planetary gear set 28.

Accordingly, through the selective operation of the clutches 8, 10, and 12, the elements 38, 36, and 44 connected to the clutches 8, 10, and 12 are selectively or simultaneously (two at a time) made to operate as input elements.

In addition, forming the brake means, the first brake 14 is interposed between the planetary carrier 34 of the second simple planetary gear set 30 and the transmission housing 42, and the second brake 16 is interposed between the ring gear 32 of the first simple planetary gear set 28 and the transmission housing 42 to allow the above elements to selectively operate as reaction elements.

In the gear train of the thirteenth preferred embodiment structured as in the above, the friction elements are operated, as shown in the operational chart of Fig. 7, to realize shifting.

In the forward first speed, the first clutch 8 and the first brake 14 are controlled to be operated. When this is done, the power of the input shaft 24 rotated by the engine 2 makes the sun gear 38 of the first simple planetary gear set 28 and the ring gear 36 of the second simple planetary gear set 30 operate as an input elements by the operation of the first clutch 8. At the same time, the planetary carrier 34 of the second simple planetary gear set 30 operate as a reaction element by the operation of the first brake 14, realizing first speed shifting. As a result, output is realized through the planetary carrier 44 of the first simple planetary gear set 28.

If vehicle speed and throttle opening are increased in the above first speed state, the TCU disengages the first brake 14 and operates the second brake 16.

In a first speed input state as in the above, the reaction element is realized through the ring gear 32 of the first simple planetary gear set 28 by the operation of the second brake 16, allowing shifting into the second speed to be realized.

If vehicle speed and throttle opening are increased in the above second speed state, the TCU disengages the second brake 16, and operates the second clutch 10.

Accordingly, in the second speed input state, second input is realized, according to the operation of the second clutch 10, so that there are two input elements, realizing third speed shifting.

In the above third speed state, if vehicle speed and throttle opening are further increased, the TCU disengages the first clutch 8, operating in the third speed, and controls the second brake 16 to operate.

As a result, first input is released, and the ring gear 32 of the first simple planetary gear set 28 operates as a reaction element by the operation of the second brake 16, realizing fourth speed shifting.

If the driver changes the selector lever to the reverse R range, the TCU controls the third clutch 12 and the first brake 14 to operate.

When the above operation is performed, input is realized through the ring gear 32 of the first simple planetary gear set 28 by the operation of the third clutch 12. At the same time, by the operation of the first brake 14, the planet carrier 34 of the second simple planetary gear set 30 operates as a reaction element to realize reverse shifting, and output is realized through the planetary carrier 44 of the first simple planetary carrier 28.

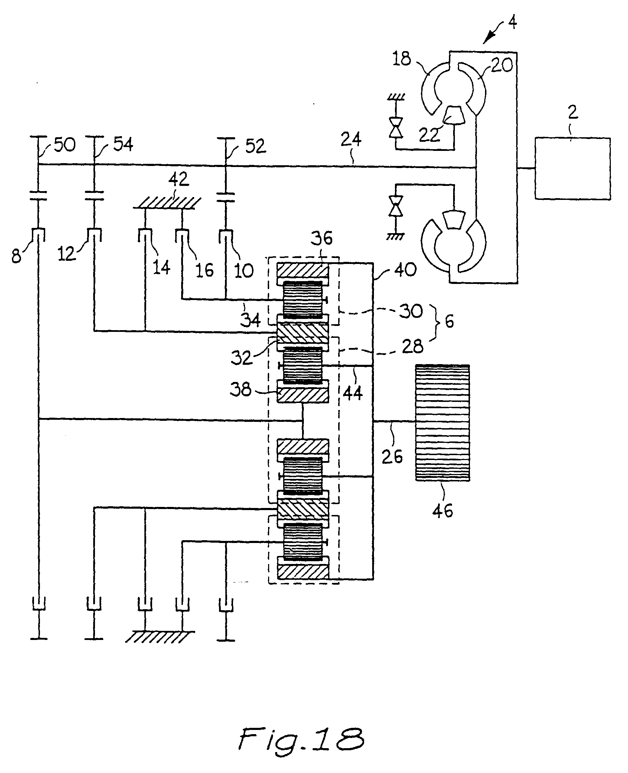

Referring to Fig. 18, there is shown a schematic diagram of a gear train according to a fourteenth embodiment of the present invention. In the fourteenth embodiment, as in the thirteenth embodiment, the input shaft 24 and the output shaft 26 are mounted parallel to each other.

The planetary carrier 44 and the ring gear 36 of the first and second simple planetary gear sets 28 and 30 are connected through the connecting member 40. Together with both the sun gear 38 and ring gear 32 of the first simple planetary gear set 28 and the planetary carrier 44 of the second simple planetary gear set 30, there are four operational elements. Also, the output shaft 26 is connected to the planetary carrier 44 of the first simple planetary gear set 28 and the ring gear 36 of the second simple planetary gear set 30 to allow for operating as output elements.

Further, by the connection of the sun gear 38 and ring gear 32 of the first simple planetary gear set 28 and the planetary carrier 34 of the second simple planetary gear set 30 to the input shaft 24 and the first, second, and third gears 50, 52, and 54, transmission of power is realized for the compound planetary gear set 6.

Also, operating as a clutch means for transmitting power of the engine 2 to the compound planetary gear set 6, the first clutch 8 is interposed between the first gear 50 and the sun gear 38 of the first simple planetary gear set 28, the second clutch 10 is interposed between the second gear 52 and the planetary carrier 36 of the second simple planetary gear set 30, and the third clutch 12 is interposed between the third gear 54 and the ring gear 32 of the first simple planetary gear set 28.

Accordingly, through the selective operation of the clutches 8, 10, and 12, the elements 38, 36, and 32 connected to the clutches 8, 10, and 12 are selectively or simultaneously (two at a time) made to operate as input elements.

In addition, forming the brake means, the first brake 14 is interposed between the ring gear 32 of the first simple planetary gear set 28 and the transmission housing 42, and the second brake 16 is interposed between the planetary carrier 34 of the second simple planetary gear set 30 and the transmission housing 42 to allow the above elements to selectively operate as reaction elements.

In the gear train of the fourteenth preferred embodiment structured as in the above, the friction elements are operated, as shown in the operational chart of Fig. 7, to realize shifting.

In the forward first speed, the first clutch 8 and the first brake 14 are controlled to be operated. When this is done, the power of the input shaft 24 rotated by the engine 2 makes the sun gear 38 of the first simple planetary gear set 28 operate as an input element by the operation of the first clutch 8. At the same time, the ring gear 32 of the first simple planetary gear set 28 operates as a reaction element by the operation of the first brake 14, realizing first speed shifting. As a result, output is realized through the planetary carrier 44 and the ring gear 36 of the first and second simple planetary gear sets 28 and 30.

If vehicle speed and throttle opening are increased in the above first speed state, the TCU disengages the first brake 8 and operates the second brake 16.

In a first speed input state as in the above, the reaction element is converted to the planetary carrier 34 of the second simple planetary gear set 30 by the operation of the second brake 16, allowing shifting into the second speed to be realized.

If vehicle speed and throttle opening are increased in the above second speed state, the TCU disengages the second brake 16, and operates the second clutch 10.

Accordingly, in the second speed input state, second input is realized, according to the operation of the second clutch 10, so that there are two input elements, realizing third speed shifting.

In the above third speed state, if vehicle speed and throttle opening are further increased, the TCU disengages the first clutch 8, operating in the third speed, and controls the second brake 16 to operate.

As a result, first input is released, and the planetary carrier 34 of the first simple planetary gear set 28 operates as a reaction element by the operation of the second brake 16, realizing fourth speed shifting.

If the driver changes the selector lever to the reverse R range, the TCU controls the third clutch 12 and the first brake 14 to operate.

When the above operation is performed, input is realized through the ring gear 32 of the first simple planetary gear set 28 by the operation of the third clutch 12. At the same time, by the operation of the first brake 14, the planet carrier 44 of the second simple planetary gear set 30 operates as a reaction element to realize reverse shifting.

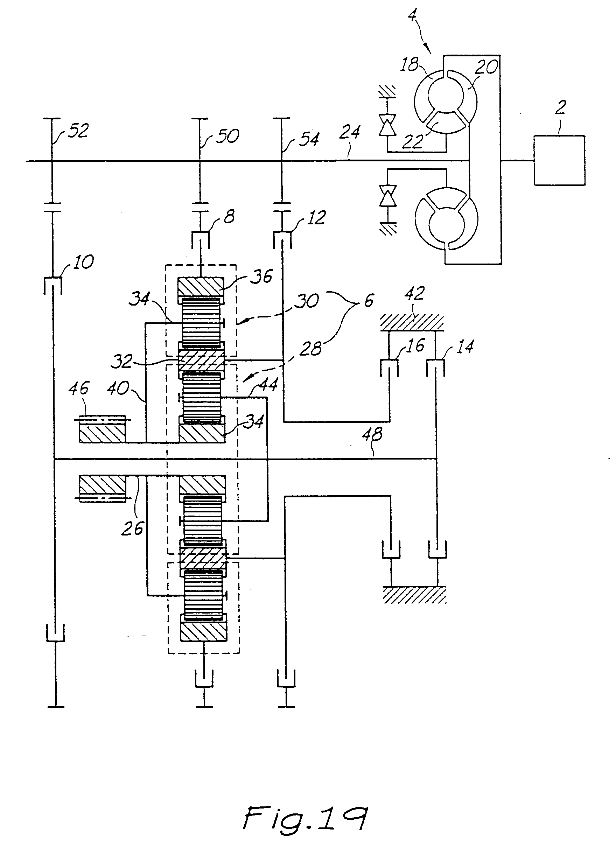

Referring to Fig. 19, there is shown a schematic diagram of a gear train according to a fifteenth embodiment of the present invention. In the fifteenth embodiment, as in the fourteenth embodiment, the input shaft 24 and the output shaft 26 are mounted parallel to each other.

The planetary carrier 44 and the sun gear 38 the first and second simple planetary gear sets 28 and 30 are connected through the connecting member 40. Together with both the planetary carrier 44 and ring gear 32 of the first simple planetary gear set 28 and the ring gear 36 of the second simple planetary gear set 30, there are four operational elements. Also, the output shaft 26 is connected to the planetary carrier 34 of the second simple planetary gear set 30 and the sun gear 38 of the first simple planetary gear set 30 to allow for operating as output elements.

Further, the ring gear 40 of the second simple planetary gear set 30 is connected to the input shaft 24 through the first gear 50, the planetary carrier 34 of the first simple planetary gear set 28 is connected to the input shaft 24 by the second gear 52, and the ring gear 32 of the first simple planetary gear set 28 able to transmit power by the third gear 54.

Also, operating as a clutch means for transmitting power of the engine 2 to the compound planetary gear set 6, the first clutch 8 is interposed between the first gear 50 and the ring gear 36 of the second simple planetary gear set 30, the second clutch 10 is interposed between the second gear 52 and the power transmitting member 48 connected to the planetary carrier 44 of the first simple planetary gear set 28, and the third clutch 12 is interposed between the third gear 54 and the ring gear 32 of the first simple planetary gear set 28.

Accordingly, through the selective operation of the clutches 8, 10, and 12, the elements connected to the clutches 8, 10, and 12 are selectively or simultaneously (two at a time) made to operate as input elements.

In addition, forming the brake means, the first brake 14 is interposed between the planetary carrier 44 of the first simple planetary gear set 28 and the transmission housing 42, and the second brake 16 is interposed between the ring gear 32 of the first simple planetary gear set 28 and the transmission housing 42 to allow the above elements to selectively operate as reaction elements.

In the gear train of the fifteenth preferred embodiment structured as described above, the friction elements are operated, as shown in the operational chart of Fig. 7, to realize shifting.

In the forward first speed, the first clutch 8 and the first brake 14 are controlled to be operated. When this is done, the power of the input shaft 24 rotated by the engine 2 makes the ring gear 36 of the second simple planetary gear set 30 operate as an input element by the operation of the first clutch 8. At the same time, the planetary carrier 44 of the first simple planetary gear set 28 operates as a reaction element by the operation of the first brake 14, realizing first speed shifting. As a result, output is realized through the sun gear 38 of the first simple planetary gear set 28 and the planetary carrier 34 of the second simple planetary gear sets 30.

If vehicle speed and throttle opening are increased in the above first speed state, the TCU disengages the first brake 14 and operates the second brake 16.

In a first speed input state as in the above, the reaction element is realized through the ring gear 32 of the first simple planetary gear set 28 by the operation of the second brake 16, allowing shifting into the second speed to be realized.

If vehicle speed and throttle opening are increased in the above second speed state, the TCU disengages the second brake 16, and operates the second clutch 10.

Accordingly, in the second speed input state, second input is realized, according to the operation of the second clutch 10, so that there are two input elements, realizing third speed shifting.

In the above third speed state, if vehicle speed and throttle opening are further increased, the TCU disengages the first clutch 8, operating in the third speed, and controls the second brake 16 to operate.

As a result, first input is released, and the ring gear 38 of the first simple planetary gear set 28 operates as a reaction element by the operation of the second brake 16, realizing fourth speed shifting.

If the driver changes the selector lever to the reverse R range, the TCU controls the third clutch 12 and the first brake 14 to operate.

When the above is performed, input is realized through the ring gear 38 of the first simple planetary gear set 28 by the operation of the third clutch 12. At the same time, by the operation of the first brake 14, the planet carrier 44 of the second simple planetary gear set 30 operates as a reaction element to realize reverse shifting. Also, output is realized through the sun gear 38 of the first simple planetary gear set 28 and the planetary carrier 34 of the second simple planetary gear set 30.

In the above second to fifteenth embodiments, as in the first embodiment, a multi-plate clutch is used for the clutches comprising the clutch means and a valve brake is used for the brakes comprising the brake means.

In the gear train of the present invention structured as described above, by utilizing a compound planetary gear set consisting of planetary gear sets combined radially, it is possible to design an automatic transmission having a short length allowing the easy application to a front-wheel-drive vehicle in which the engine is installed transversely.

Although preferred embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claim.

## Claims

1. A gear train for a four-speed automatic transmission used in a vehicle, comprising:
a compound planetary gear set, realized through combining first and second simple planetary gear sets in a radial direction, the second simple planetary gear set being enclosed by a ring gear of the first simple planetary gear set, the ring gear able to act as a sun gear for the second simple planetary gear set, further including five operational elements, with two of the elements combined so as to define four operational elements, and among these four operational elements at least two are selected as an input element and a reaction element, and by rotational power inputted from an input shaft, the compound planetary gear set is able to convert into four forward speeds and one reverse speed;
clutch means, mounted between at least two of the four operational elements of the compound planetary gear set and an input shaft and operating such that it selects the operational elements to be input elements; and
brake means, mounted between at least two of the four operational elements of the compound planetary gear set and a transmission housing and operating such that it selects the operational elements to be reaction elements.

2. The gear train of claim 1, wherein the input shaft and an output shaft are mounted aligned with respect to each other.

3. The gear train of claim 1, wherein the compound planetary gear set integrally connects a sun gear of the first simple planetary gear set and a planetary carrier of the second simple planetary gear set to define one operational element.

4. The gear train of claim 1, wherein the compound planetary gear set integrally connects a planetary carrier of the first simple planetary gear set and the planetary carrier of the second simple planetary gear set to define one operational element.

5. The gear train of claim 1, wherein the compound planetary gear set integrally connects the sun gear of the first simple planetary gear set and a ring gear of the second simple planetary gear set to define one operational element.

6. The gear train of claim 1, wherein the compound planetary gear set integrally connects the sun gear of the first simple planetary gear set and the ring gear of the second simple planetary gear set to define one operational element.

7. The gear train of claim 1, wherein the clutch means for transmitting engine power to the compound planetary gear set comprises:
a first clutch interposed between the ring gear of the first simple planetary gear set and the input shaft;
a second clutch interposed between the planetary carrier of the second simple planetary gear set and the input shaft; and
a third clutch interposed between the ring gear of the second simple planetary gear set and the input shaft.

8. The gear train of claim 1, wherein the clutch means for transmitting engine power to the compound planetary gear set comprises:
a first clutch interposed between the sun gear of the first simple planetary gear set and the input shaft;
a second clutch interposed between the planetary carrier of the first simple planetary gear set and the input shaft; and
a third clutch interposed between the ring gear of the first simple planetary gear set and the input shaft.

9. The gear train of claim 1, wherein the clutch means for transmitting engine power to the compound planetary gear set comprises:
a first clutch interposed between the ring gear of the first simple planetary gear set and the input shaft;
a second clutch interposed between the ring gear of the second simple planetary gear set and the input shaft; and
a third clutch interposed between the sun gear of the first simple planetary gear set and the input shaft.

10. The gear train of claim 1, wherein the clutch means for transmitting engine power to the compound planetary gear set comprises:
a first clutch interposed between the sun gear of the first simple planetary gear set and the input shaft; and
a second clutch interposed between both the ring gear of the second simple planetary gear set and the planetary carrier of the first simple planetary gear set and the input shaft.

11. The gear train of claim 1, wherein the clutch means for transmitting engine power to the compound planetary gear set comprises:
a first clutch interposed between a connecting member connecting the sun gear of the first simple planetary gear set and the ring gear of the second simple planetary gear set and the input shaft; and
a second clutch interposed between the planetary carrier of the first simple planetary gear set and the input shaft.

12. The gear train of claim 1, wherein the clutch means for transmitting engine power to the compound planetary gear set comprises:
a first clutch interposed between the ring gear of the first simple planetary gear set and the input shaft; and
a second clutch interposed between the planetary carrier of the first simple planetary gear set and the input shaft.

13. The gear train of claim 1, wherein the clutch means for transmitting engine power to the compound planetary gear set comprises:
a first clutch interposed between the ring gear of the first simple planetary gear set and the input shaft; and
a second clutch interposed between the planetary carrier of the second simple planetary gear set and the input shaft.

14. The gear train of claim 1, wherein the clutch means for transmitting engine power to the compound planetary gear set comprises:
a first clutch interposed between the ring gear of the first simple planetary gear set and the input shaft; and
a second clutch interposed between both the planetary carrier of the second simple planetary gear set.

15. The gear train of claim 1, wherein the brake means comprises:
a first brake interposed between a connecting member connecting the sun gear of the first simple planetary gear set and the planetary carrier of the second simple planetary gear set and a transmission housing; and
a second brake interposed between the ring gear of the second simple planetary gear set and the transmission housing.

16. The gear train of claim 1, wherein the brake means comprises:
a first brake interposed between the planetary carrier of the first and second simple planetary gear sets and the transmission housing; and
a second brake interposed between the ring gear of the first simple planetary gear set and the transmission housing.

17. The gear train of claim 1, wherein the brake means comprises:
a first brake interposed between the ring gear of the second simple planetary gear set and the transmission housing; and
a second brake interposed between the sun gear of the first simple planetary gear set and the transmission housing.

18. The gear train of claim 1, wherein the brake means comprises:
a first brake interposed between the ring gear of the first simple planetary gear set and the transmission housing;
a second brake interposed between the sun gear of the first simple planetary gear set and the transmission housing; and
a third brake interposed between the ring gear of the second simple planetary gear set and the transmission housing.

19. The gear train of claim 1, wherein the brake means comprises:
a first brake interposed between the ring gear of the first simple planetary gear set and the transmission housing;
a second brake interposed between the ring gear of the second simple planetary gear set and the transmission housing; and
a third brake interposed between a second shaft, connected with the planetary carrier of the first simple planetary gear set, and the transmission housing.

20. The gear train of claim 1, wherein the brake means comprises:
a first brake interposed between the sun gear of the first;
a second brake interposed between the ring gear of the first simple planetary gear set and the transmission housing; and
a third brake interposed between the second shaft, connected with the planetary carrier of the first simple planetary gear set and the transmission housing.

21. The gear train of claim 1, wherein the brake means comprises:
a first brake interposed between the ring gear of the second simple planetary gear set and the transmission housing;
a second brake interposed between the ring gear of the first simple planetary gear set and the transmission housing; and
a third brake interposed between the second shaft, connected to the planetary carrier of the first simple planetary gear set, and the transmission housing.

22. The gear train of claim 1, wherein the brake means comprises:
a first brake interposed between the sun gear of the first simple planetary gear set and the transmission housing;
a second brake interposed between the second shaft, connected with the ring gear of the first simple planetary gear set and the transmission housing; and
a third brake interposed between the planetary carrier of the first simple planetary gear set and the transmission housing.

23. The gear train of claim 1, wherein the brake means comprises:
a first brake interposed between the ring gear of the second simple planetary gear set and the transmission housing;
a second brake interposed between the second shaft, connected with the ring gear of the first simple planetary gear set, and the transmission housing; and
a third brake interposed between both the planetary carrier of the second simple planetary gear set and the sun gear of the first planetary gear and the transmission housing.

24. The gear train of claim 1, wherein the brake means comprises:
a first brake interposed between the ring gear of the first planetary gear set and the transmission housing;
a second brake interposed between the ring gear of the second simple planetary gear set and the transmission housing; and
a third brake interposed between both the sun gear of the first simple planetary gear set and the planetary carrier of the second simple planetary gear set and the transmission housing.

25. The gear train of claim 1, wherein the sun gear of the first simple planetary gear set is connected to the planetary carrier of the second simple planetary gear set and the planetary gear set is operated as output elements;
said clutch means is comprised of a plurality of clutches which are disposed between the input shaft and a first plurality of elements, including the ring gear of the first simple planetary gear set and both the planetary carrier and ring gear of the second simple planetary gear set, such that said first plurality of elements can selectively act as input elements; and
said brake means is comprised of a plurality of brakes which are disposed between the transmission housing and a second plurality of elements, including the sun gear of the first simple planetary gear set and the planetary carrier of the second simple planetary gear set and the ring gear of the simple planetary gear set, such that said second plurality of elements can selectively act as reaction elements.

26. The gear train of claim 1, wherein the planetary carrier of the first simple planetary gear set is connected to the planetary carrier of the second simple planetary gear set and the ring gear of the second simple planetary gear set is operated as output elements;
said clutch means is comprised of a plurality of clutches which are disposed between the input shaft and a first plurality of elements, including the sun gear, planetary carrier, and ring gear of the first simple planetary gear set and the planetary carrier, such that said first plurality of elements can selectively act as input elements; and
said brake means is comprised of a plurality of brakes which are disposed between the transmission housing and a second plurality of elements, including the ring gear of the second simple planetary gear set and the planetary carrier of the second simple planetary gear set, such that said second plurality of elements can selectively act as reaction elements.

27. The gear train of claim 1, wherein the planetary carrier of the first simple planetary gear set is connected to the planetary carrier of the second simple planetary gear set to operate as output elements;
said clutch means is comprised of a plurality of clutches which are disposed between the input shaft and a first plurality of elements, including the ring gear of the first simple planetary gear set, the ring gear of the second simple planetary gear set, and the sun gear of the first simple planetary gear set, such that said first plurality of elements can selectively act as input elements; and
said brake means is comprised of a plurality of brakes which are disposed between the transmission housing and a second plurality of elements, including the ring gear of the first simple planetary gear set and the sun gear of the first simple planetary gear set, such that said second plurality of elements can selectively act as reaction elements.

28. The gear train of claim 1, wherein the planetary carrier of the first simple planetary gear set is connected to the ring gear of the second simple planetary gear set;
said clutch means is comprised of a plurality of clutches which are disposed between the input shaft and a first plurality of elements, including the sun gear of the first simple planetary gear set and both the planetary carrier and ring gear of the first and second simple planetary gear sets, such that said first plurality of elements can selectively act as input elements; and
said brake means is comprised of a plurality of brakes which are disposed between the transmission housing and a second plurality of elements, including the ring gear of the first simple planetary gear set and the sun gear of the first planetary gear set and both the planetary carrier of the first simple planetary gear set and ring gear of the second simple planetary gear set, such that said second plurality elements can selectively act as reaction elements.

29. The gear train of claim 1, wherein the sun gear of the first simple planetary gear set is connected to the ring gear of the second simple planetary gear set;
said clutch means is comprised of a plurality of clutches which are disposed between the input shaft and a first plurality of elements, including the sun gear of the first simple planetary gear set, the ring gear of the second simple planetary gear set, and the planetary carrier of the first simple planetary gear set, such that said first plurality of elements can selectively act as input elements; and
said brake means is comprised of a plurality of brakes which are disposed between the transmission housing and a second plurality of elements, including the ring gear of the first simple planetary gear set and both the ring gear of the second simple planetary gear set and the sun gear of the first simple planetary ear set and the planetary carrier of the first simple planetary gear set, such that said second plurality of elements can selectively act as reaction elements.

30. The gear train of claim 1, wherein the planetary carrier of the first simple planetary gear set is connected to the planetary carrier of the second simple planetary gear set and the ring gear of the second planetary gear set is operated as output and reaction elements;
said clutch means is comprised of a plurality of clutches which are disposed between the input shaft and a first plurality of elements, including the ring gear of the first simple planetary gear set and the planetary carrier of the second simple planetary gear set, such that said first plurality of elements can selectively act as input elements; and
said brake means is comprised of a plurality of brakes which are disposed between the transmission housing and a second plurality of elements, including the ring gear, sun gear, and planetary carrier of the first simple planetary gear set, such that said second plurality of elements can selectively act as reaction elements.

31. The gear train of claim 1, wherein the sun gear of the first simple planetary gear set is connected to the planetary carrier of the second simple planetary gear set;
said clutch means is comprised of a plurality of clutches which are disposed between the input shaft and a first plurality of elements, including the ring gear and planetary carrier of the first simple planetary gear set, such that said first plurality of elements can selectively act as input elements; and
said brake means is comprised of a plurality of brakes which are disposed between the transmission housing and a second plurality of elements, including the ring gear of the second simple planetary gear set and the ring gear and planetary carrier of the first simple planetary gear set, such that said second plurality of elements can selectively act as reaction elements.

32. The gear train of claim 1, wherein the planetary carrier of the first simple planetary gear set is connected to the planetary carrier of the second simple planetary gear set to operate as output elements;
said clutch means is comprised of a plurality of clutches which are disposed between the input shaft and a first plurality of elements, including the ring gear of the first simple planetary gear set and the planetary carrier of the second simple planetary gear set, such that said first plurality of elements can selectively act as input elements; and
said brake means is comprised of a plurality of brakes which are disposed between the transmission housing and a second plurality of elements, including the ring gear and sun gear of the first simple planetary gear set and the planetary carrier of the second simple planetary gear set, such that said second plurality of elements can selectively act as reaction elements.

33. The gear train of claim 1, wherein the sun gear of the first simple planetary gear set is connected to the planetary carrier of the second simple planetary gear set;
said clutch means is comprised of a plurality of clutches which are disposed between the input shaft and a first plurality of elements, including the ring gear of the first simple planetary gear set and both the planetary carrier of the second simple planetary gear set and the sun gear of the first planetary gear set, such that said first plurality of elements can selectively act as input elements; and
said brake means is comprised of a plurality of brakes which are disposed between the transmission housing and a second plurality of elements, including the ring gear of the first simple planetary gear set and ring gear of the second simple planetary gear set both the planetary carrier of the second simple planetary gear set and the sun gear of the first simple planetary gear set, such that said second plurality of elements can selectively act as reaction elements.

34. The gear train of claim 1, wherein the sun gear of the first simple planetary gear set is connected to the planetary carrier of the second simple planetary gear set;
said clutch means is comprised of a plurality of clutches which are disposed between the input shaft and a first plurality of elements, including both the sun gear of the first simple planetary gear set and the planetary carrier of the second simple planetary gear set and the ring of the second simple planetary gear set, such that said first plurality of elements can selectively act as input elements; and
said brake means is comprised of a plurality of brakes which are disposed between the transmission housing and second plurality of elements, including the ring gear of the first simple planetary gear set and the ring gear of the second simple planetary gear set, such that said first plurality of elements can selectively act as reaction elements.

35. The gear train of claim 1, wherein said input shaft and output shaft are mounted to act as a gear transmitter to transmit power to the compound planetary gear set.

36. The gear train of claim 35, wherein the gear transmitter comprises:
a first gear interposed between the input shaft and the sun gear and ring gear of the first simple planetary gear sets; and
a second gear interposed between the input shaft and both the ring gear of the second simple planetary gear set and the planetary carrier of the first simple planetary gear set.

37. The gear train of claim 35, wherein the gear transmitter comprises:
a first gear interposed between the input shaft and both a power transmitting member connected to the ring gear of the first simple planetary gear set and the planetary carrier of the first simple planetary gear set; and
a second gear interposed between the input shaft and both the ring gear of the second simple planetary gear set and the sun gear of the simple planetary gear set.

38. The gear train of claim 35, wherein the gear transmitter comprises:
a first gear interposed between the input shaft and the power transmitting member connected to the ring gear of the first simple planetary gear set; and
a second gear interposed between the input shaft and the ring gear and planetary carrier of the second simple planetary gear set and both the ring gear of the second planetary gear set and the sun gear of the first planetary gear set.

39. The gear train of claim 35, wherein the gear transmitter comprises:
a first gear interposed between the input shaft and the sun gear of the first simple planetary gear set;
a second gear interposed between the input shaft and the planetary carrier of the second simple planetary gear set; and
a third gear interposed between the input shaft and the ring gear of the first simple planetary gear set.

40. The gear train of claim 35, wherein the gear transmitter comprises:
a first gear interposed between the input shaft and the ring gear of the second simple planetary gear set;
a second gear interposed between the input shaft and the planetary carrier of the first simple planetary gear set; and
a third gear interposed between the input shaft and the ring gear of the first simple planetary gear set.

41. The gear train of claim 1 or 35, wherein the clutch means for transmitting engine power to the compound planetary gear set comprises:
a first clutch interposed between the input shaft and both the planetary carrier of the first simple planetary gear set and the ring gear of the second simple planetary gear set;
a second clutch interposed between the planetary carrier of the first simple planetary gear set, the ring gear of the second simple planetary gear set, and the input shaft; and
a third clutch interposed between the sun gear of the first simple planetary gear set and the input shaft.

42. The gear train of claim 1 or 35, wherein the clutch means for transmitting engine power to the compound planetary gear set comprises:
a first clutch interposed between the second shaft connected to the ring gear of the first simple planetary gear set and the first gear;
a second clutch interposed between the planetary carrier of the first simple planetary gear set and the first gear; and
a third clutch interposed between both the ring gear of the second simple planetary gear set and the sun gear of the first simple planetary gear set and the second gear.

43. The gear train of claim 1 or 35, wherein the clutch means for transmitting engine power to the compound planetary gear set comprises:
a first clutch interposed between the sun gear and ring gear of the first and second simple planetary gear sets and the input shaft;
a second clutch interposed between the planetary carrier of the second simple planetary gear set and the input shaft; and
a third clutch interposed between the second shaft connected to the ring gear of the first simple planetary gear set and the input shaft.

44. The gear train of claim 1 or 35, wherein the clutch means for transmitting engine power to the compound planetary gear set comprises:
a first clutch interposed between the sun gear of the first simple planetary gear set and the first gear;
a second clutch interposed between the planetary carrier of the second simple planetary gear set and the second gear; and
a third clutch interposed between the ring gear of the first simple planetary gear set and the third gear.

45. The gear train of claim 1 or 35, wherein the brake means comprises:
a first brake interposed between the planetary carrier of the first simple planetary gear set and the transmission housing; and
a second brake interposed between both the ring gear of the second simple planetary gear set and the sun gear of the first planetary gear set and the transmission housing.

46. The gear train of claim 1 or 35, wherein the brake means comprises:
a first brake interposed between the planetary carrier of the second simple planetary gear set and the transmission housing; and
a second brake interposed between the ring gear of the first simple planetary gear set and the transmission housing.

47. The gear train of claim 1 or 35, wherein the brake means comprises:
a first brake interposed between the ring gear of the first simple planetary gear set and the transmission housing; and
a second brake interposed between the planetary carrier of the second simple planetary gear set and the transmission housing.

48. The gear train of claim 1 or 35, wherein the brake means comprises:
a first brake interposed between the planetary carrier of the first simple planetary gear set and the transmission housing; and
a second brake interposed between the ring gear of the first simple planetary gear set and the transmission housing.

49. The gear train of claim 1 or 35, wherein the planetary carrier of the first simple planetary gear set is connected to the ring gear of the second simple planetary gear set;
said gear transmitter is comprised of a first gear transmitting power to the power transmitting member connected to the sun gear and ring gear of the first simple planetary gear set forming the compound planetary gear set, and a second gear transmitting power to the connecting member connected to the ring gear of the second simple planetary gear set and the planetary carrier of the first simple planetary gear set;
said clutch means is comprised of a plurality of clutches which are disposed between the input shaft and a first plurality of elements, including the sun gear and ring gear of the first simple planetary gear set and the ring gear of the second simple planetary gear set and the planetary carrier of the first simple planetary gear set, such that said first plurality of elements can selectively act as input elements; and
said brake means is comprised of a plurality of brakes which are disposed between the transmission housing and a second plurality of elements, including the sun gear of the first simple planetary gear set and both the ring gear of the second simple planetary gear set and the planetary carrier of the first simple planetary gear set, such that said second plurality of elements can selectively act as reaction elements.

50. The gear train of claim 1 or 35, wherein the sun gear of the first simple planetary gear set is connected to the ring gear of the second simple planetary gear set;
said gear transmitter is comprised of a first gear transmitting power to the planetary carrier and the power transmitting member connected to the ring gear of the first simple planetary gear set forming the compound planetary gear set, and a second gear transmitting power to the ring gear of the second simple planetary gear set and sun gear of the first simple planetary gear set;
said clutch means is comprised of a plurality of clutches which are disposed between the input shaft and a first plurality of elements, including the ring gear of the first simple planetary gear set, planetary carrier of the first simple planetary gear set, and both the ring gear of the second simple planetary gear set and sun gear of the first and second simple planetary gear sets, such that said first plurality of elements can selectively act as input elements; and
said brake means is comprised of a plurality of brakes which are disposed between the transmission housing and a second plurality of elements, including the planetary carrier of the first simple planetary gear set and both the ring gear of the second simple planetary gear set and the sun gear of the first simple planetary gear set, such that said second plurality of elements can selectively act as reaction elements.

51. The gear train of claim 1 or 35, wherein the sun gear of the first simple planetary gear set is connected to the ring gear of the second simple planetary gear set;
said gear transmitter is comprised of a gear simultaneously transmitting power to the planetary carrier of the second simple planetary gear and both the sun gear of the first simple planetary gear set and the ring gear of the second simple planetary gear set and the gear transmitting member connected to the ring gear of the first simple planetary gear set forming the compound planetary gear set;
said clutch means is comprised of a plurality of clutches which are disposed between the input shaft and a first plurality of elements, including the ring gear of the first simple planetary gear set and both the sun gear of the first simple planetary gear set and ring gear of the second simple planetary gear set, and the planetary carrier of the second simple planetary gear set, such that said first plurality of elements can selectively act as input elements; and
said brake means is comprised of a plurality of brakes which are disposed between the transmission housing and second plurality of elements, including the ring gear of the first simple planetary gear set and the planetary carrier of the second simple planetary gear set, such that said second plurality of elements can selectively act as reaction elements.

52. The gear train of claim 1 or 35, wherein the planetary carrier of the first simple planetary gear set is connected to the ring gear of the second simple planetary gear set to operate as output elements;
said gear transmitting means is comprised of a gear transmitting rotational power of the input shaft to the planetary carrier of the second simple planetary gear and the ring gear and sun gear of the first simple planetary gear set forming the compound planetary gear set;
said clutch means is comprised of a plurality of clutches which are disposed between the input shaft and a first plurality of elements, including the ring gear and sun gear of the first simple planetary gear set and the planetary carrier of the second simple planetary gear set, such that said first plurality of elements can selectively act as input elements; and
said brake means is comprised of a plurality of brakes which are disposed between the transmission housing and a second plurality of elements, including the ring gear of the first simple planetary gear set and the planetary carrier of the second simple planetary gear set, such that said second plurality of elements can selectively act as reaction elements.

53. The gear train of claim 1 or 35, wherein the sun gear of the first simple planetary gear set is connected to the planetary carrier of the second simple planetary gear set;
said gear transmitting means is comprised of a gear transmitting rotational power of the input shaft by being inserted between the input shaft and the ring gear of the second simple planetary gear and the ring gear and planetary carrier of the first simple planetary gear set forming the compound planetary gear set;
said clutch means is comprised of a plurality of clutches which are disposed between the input shaft and a first plurality of elements, including the ring of the second simple planetary gear set, the planetary carrier and the ring gear of the first simple planetary gear sets, such that said first plurality of elements can selectively act as input elements; and
said brake means is comprised of a plurality of brakes which are disposed between the transmission housing and a second plurality of elements, including the planetary carrier and ring gear of the first simple planetary gear set, such that said first plurality of elements can selectively act as reaction elements.

54. The gear train of claim 1 or 35, wherein the clutch means comprises a first clutch interposed between the ring gear of the first simple planetary gear set and the input shaft, and a second clutch interposed between the planetary carrier of the second simple planetary gear set and the input shaft.

55. The gear train of claim 1 or 35, wherein the clutch means comprises:
a first clutch interposed between the ring gear of the second simple planetary gear set and the input shaft, and a second clutch interposed between the planetary carrier of the second simple planetary gear set and the input shaft.

56. The gear train of claim 1 or 35, wherein the brake means comprises a first brake interposed between the ring gear of the second simple planetary gear set and the transmission housing, and a second brake interposed between the sun gear of the first simple planetary gear set and the transmission housing.

57. The gear train of claim 35, wherein the clutch means comprises a first clutch interposed between the first gear and the ring gear of the second simple planetary gear set, a second clutch interposed between the second gear and the power transmitting member connected to the planetary carrier of the first simple planetary gear set, and a third clutch interposed between the third gear and the ring gear of the first simple planetary gear set.
